# EUROPEAN PATENT APPLICATION

(11) **EP 4 160 953 A1**
(43) Date of publication of application: **05.04.2023**
(21) Application number: 21813963.2
(22) Date of filing: 17.05.2021
(51) Int. Cl.: H04L 1/00, H04L 1/22

(54) **INFORMATION PROCESSING DEVICE, INFORMATION PROCESSING SYSTEM, AND COMMUNICATION METHOD**

(30) Priority: 25.05.2020 JP 2020090849
(71) Applicant: Sony Group Corporation, Minato-Ku, Tokyo, 108-0075 (JP)
(72) Inventor: MATSUDA, Hiroki, Tokyo 108-0075 (JP); SUGAI, Ren, Tokyo 108-0075 (JP); KIMURA, Ryota, Tokyo 108-0075 (JP)
(74) Representative: Witte, Weller & Partner Patentanwälte mbB
(86) International application number: PCT/JP2021/018603
(87) International publication number: WO 2021/241302

(57) **Abstract**

An information processing device (200, 300) includes a first encoding processing unit (212b), a second encoding processing unit (212d), and a communication unit (21, 41). The first encoding processing unit (212b) performs first error correction encoding processing in which a plurality of bit sequences are output from one or more bit sequences. The second encoding processing unit (212d) performs second error correction encoding processing in which one bit sequence is output from one bit sequence. The communication unit (21, 41) transmits at least one of a first transmission signal or a second transmission signal depending on a predetermined condition, the first transmission signal being obtained by performing the first error correction encoding processing and the second error correction encoding processing on transmission data sequences, and the second transmission signal being obtained by performing the second error correction encoding processing on the transmission data sequences.

## Description

### Field

The present disclosure relates to an information processing device, an information processing system, and a communication method.

### Background

Wireless access schemes and wireless networks for cellular mobile communication (hereinafter, also referred to as "long term evolution (LTE)", "LTE-advanced (LTE-A)", "LTE-advanced Pro (LTE-A Pro)", "new radio (NR)", "new radio access technology (NRAT)", "evolved universal terrestrial radio access (EUTRA)", or "further EUTRA (FEUTRA)") have been studied in the 3rd generation partnership project (3GPP). Note that, in the following description, LTE includes LTE-A, LTE-A Pro, and EUTRA, and NR includes NRAT and FEUTRA. In LTE and NR, a base station device (base station) is also referred to as an evolved Node B (eNodeB), and a terminal device (mobile station, mobile station device, and terminal) is also referred to as user equipment (UE). LTE and NR are cellular communication systems in which a plurality of areas covered by base station devices are arranged in cell type. A single base station device may manage a plurality of cells.

NR, which is a next-generation radio access scheme for LTE, is a radio access technology (RAT) different from LTE. NR is an access technology that can deal with various use cases including enhanced mobile broadband (eMBB), massive machine type communications

(mMTC), and reliable and low latency communications (URLLC). NR is studied aiming at a technical framework corresponding to application scenarios, requirement conditions, arrangement scenarios, and the like in those use cases.

NR requires highly reliable and low-delay communication. In order to satisfy such requirements, error correction coding has been studied for NR. Non Patent Literature 1 discloses a technology related to error correction coding studied for NR.

### Citation List

### Non Patent Literature

Non Patent Literature 1: 3GPP TS 38.212 V15.7.0 (2019-09), "Multiplexing and channel coding (Release 15)" Summary

### Technical Problem

However, when error correction capability is increased to realize more highly reliable error correction coding, a processing amount for performing error correction increases. There is a concern that the increase in processing amount for performing error correction makes it difficult to realize low-delay communication, for example, because a long time is required for reception processing.

At this point, the present disclosure proposes an information processing device, an information processing system, and a communication method capable of further reducing a processing amount for error correction. Solution to Problem

According to the present disclosure, an information processing apparatus is provided. The information processing device includes a first encoding processing unit, a second encoding processing unit, and a communication unit. The first encoding processing unit performs first error correction encoding processing in which a plurality of bit sequences are output from one or more bit sequences. The second encoding processing unit performs second error correction encoding processing in which one bit sequence is output from one bit sequence.

The communication unit transmits at least one of a first transmission signal or a second transmission signal depending on a predetermined condition, the first transmission signal being obtained by performing the first error correction encoding processing and the second error correction encoding processing on transmission data sequences, and the second transmission signal being obtained by performing the second error correction encoding processing on the transmission data sequences.

### Brief Description of Drawings

FIG. 1 is an explanatory diagram for explaining an example of a schematic configuration of a network including a system according to an embodiment of the present disclosure.
FIG. 2 is a diagram illustrating an example of a configuration of a base station device according to an embodiment of the present disclosure.
FIG. 3 is a diagram illustrating an example of a configuration of a terminal device according to an embodiment of the present disclosure.
FIG. 4A is a diagram for explaining an overview of first FEC according to an embodiment of the present disclosure.
FIG. 4B is a diagram for explaining an overview of first FEC according to an embodiment of the present disclosure.
FIG. 5 is a diagram for explaining an overview of second FEC according to an embodiment of the present disclosure.
FIG. 6 is a diagram illustrating an example of a protocol stack to which first FEC and second FEC are applied according to an embodiment of the present disclosure.
FIG. 7 is a diagram illustrating an example of a configuration of a transmission processing unit of the base station device according to an embodiment of the present disclosure.
FIG. 8 is a diagram illustrating an example of a configuration of a reception processing unit of the base station device according to an embodiment of the present disclosure.
FIG. 9A is a table for explaining examples of 5QI.
FIG. 9B is a table for explaining examples of 5QI.
FIG. 9C is a table for explaining examples of 5QI.
FIG. 10 is a sequence diagram illustrating an example of downlink communication processing according to an embodiment of the present disclosure.
FIG. 11 is a sequence diagram illustrating an example of uplink communication processing according to an embodiment of the present disclosure.
FIG. 12 is a sequence diagram illustrating an example of sidelink communication processing according to an embodiment of the present disclosure.
FIG. 13 is a sequence diagram illustrating an example of communication processing according to an embodiment of the present disclosure.

### Description of Embodiments

Hereinafter, preferred embodiments of the present disclosure will be described in detail with reference to the accompanying drawings. Note that, in the present specification and the drawings, components having substantially the same functional configurations are denoted by the same reference signs, and the description thereof will not be repeated.

In addition, in the present specification and the drawings, similar components between the embodiments may be distinguished from each other by attaching different alphabets to the same reference numerals. However, in a case where it is not necessary to particularly distinguish the similar components from each other, only the same reference numeral is attached to the similar components.

Note that the description will be given in the following order.
1. Example of Configuration
   1.1. Example of Network Configuration
   1.2. Example of Configuration of Base Station Device
   1.3. Example of Configuration of Terminal Device
2. Error Correction Coding
   2.1. First FEC
   2.2. Second FEC
   2.3. FEC Processing
3. Determination of Switching
4. Change of Signal Processing
5. Communication Processing
   5.1. Downlink Communication Processing
   5.2. Uplink Communication Processing
   5.3. Sidelink Communication Processing
   5.4. Other Communication Processing
6. Supplement

### <<1. Example of Configuration>>

### <1.1. Example of Network Configuration>

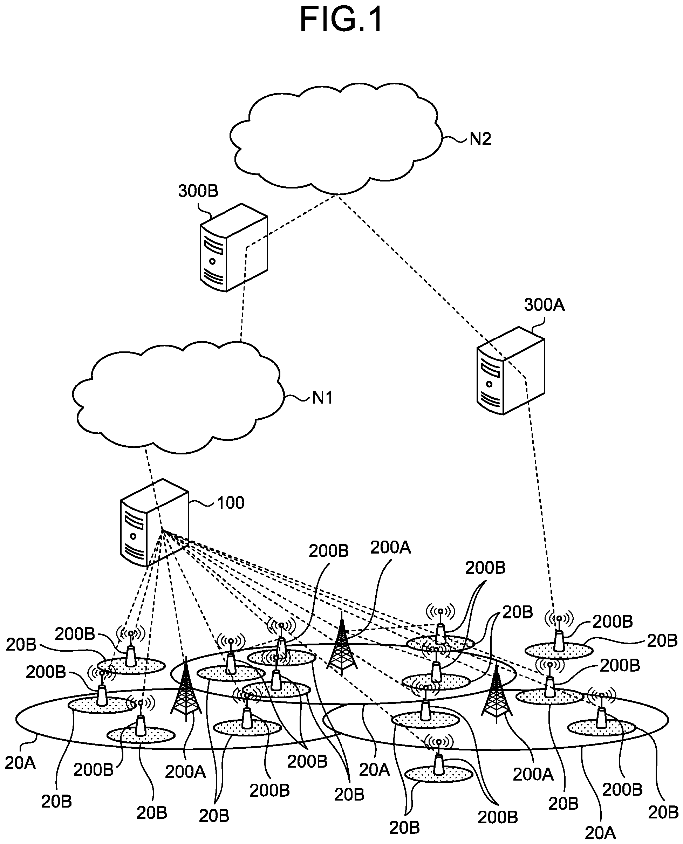

First, an example of a schematic configuration of a network including a system according to an embodiment of the present disclosure will be described with reference to FIG. 1. FIG. 1 is an explanatory diagram for explaining an example of a schematic configuration of a network including a system according to an embodiment of the present disclosure.

A system according to an embodiment of the present disclosure includes a base station device 200 and a terminal device 400 (not illustrated). A base station device 200A illustrated in FIG. 1 is a macro cell base station device, and provides a service to the terminal device 400 using a cell 20A as a communication area. Note that the cell 20A is a macro cell.

On the other hand, a base station device 200B is a small cell base station device, and provides a service to the terminal device 400 using a cell 20B as a communication area. Note that the cell 20B is a small cell.

The cell 20A may be operated according to any wireless communication scheme such as LTE, LTE-Advanced (LTE-A), LTE-ADVANCED PRO, GSM (registered trademark), UMTS, W-CDMA, CDMA2000, WiMAX, WiMAX2, or IEEE802.16.

Note that the small cell is a concept that can include various types of cells (e.g., femtocell, nanocell, picocell, or microcell) smaller than the macro cell, while being arranged to overlap with the macro cell or not to overlap with the macro cell. In one example, the small cell is operated by a dedicated base station device. In another example, the small cell is operated by a terminal serving as a master device temporarily operating as a small cell base station device. A so-called relay node can also be considered to be a type of small cell base station device. A wireless communication device functioning as a master station of the relay node is also referred to as a donor base station device. The donor base station device may refer to a DeNB in LTE, and more generally, may refer to a master station of the relay node.

Note that one base station device 200 may provide a plurality of cells 20.

In addition, a plurality of base station devices 200B may form one group (cluster). In this case, a role as a cluster head may be assigned to one of the plurality of base station devices 200B included in the cluster.

The base station devices 200 can communicate with each other via a backhaul, and mainly exchange control information. The backhaul may be wired or wireless. In the backhaul, exchange can be performed, for example, using a protocol of an X2 interface or an S1 interface.

The base station device 200 also has a backhaul with a core network N1. In this case, the base station device 200 may be connected to the core network N1 via a control entity 100. Note that the control entity 100 may be an entity of the core network N1.

Alternatively, the base station device 200 may be connected to the core network N1 via an external network N2. Examples of such a base station device 200 include a femto cell base station device and a home eNodeB (HeNB) device that can be installed indoors or at home. In this case, the base station device 200 is connected to the external network N2 via a gateway device 300A. The gateway device 300A is a gateway device for HeNB. The external network N2 is connected to the core network N1 via a gateway device 300B. Therefore, the base station device 200 can be connected to the core network N1 via the external network N2 as well.

Note that the base station device 200A and the base station device 200B may use the same radio resource in the cell 20A and the cell 20B, respectively. For example, the cells 20A and 20B may use the same frequency resource F1, or may use the same time resource T1. When the base station devices 200 use the same radio resource as described above, it is possible to improve efficiency in utilizing the radio resource from the point of view of the entire system.

Alternatively, the base station device 200A and the base station device 200B may use different radio resources in the cell 20A and the cell 20B, respectively. For example, the base station device 200A may use a frequency resource F1 in the cell 20A, and the base station device 200B may use a frequency resource F2 in the cell 20B. Alternatively, the base station device 200A may use a time resource T1 in the cell 20A, and the base station device 200B may use a time resource T2 in the cell 20B. When the base station device 200A and the base station device 200B use different radio resources as described above, it is possible to avoid interference between the cell 20A and the cell 20B.

Alternatively, the base station device 200A and the base station device 200B may use different radio resources in the cell 20A and the cell 20B, respectively. The base station device 200A and the base station device 200B may perform communication, each using both the frequency resources F1 and F2. Alternatively, the base station device 200A and the base station device 200B may perform communication, each using both the time resources T1 and T2. In particular, in a case where the base station device 200 uses the frequency resources F1 and F2, this is equivalent to carrier aggregation (CA).

Note that lines connecting the devices to each other, which are indicated as broken lines in FIG. 1, indicate logical connections, regardless of whether or not the devices are physically connected to each other in a direct manner.

### <1.2. Example of Configuration of Base Station Device>

The base station device 200 is a wireless communication device that operates a cell and wirelessly communicates with the terminal device 400. The base station device 200 is a type of information processing device (communication device). A plurality of base station devices 200 may be connected to each other. One or more base station devices 200 may be included in a radio access network (RAN). That is, the base station device 200 may be simply referred to as a RAN, a RAN node, an access network (AN), or an AN node. When a CN to be connected is an EPC, a corresponding RAN is referred to as an enhanced universal terrestrial RAN (EUTRAN). When a CN to be connected is a 5GC, a corresponding RAN is referred to as an NGR_AN. A RAN in W-CDMA (UMTS) is referred to as a UTRAN. An LTE base station is referred to as an evolved node B (eNodeB) or an eNB. That is, the EUTR_AN includes one or more eNodeBs (eNBs). In addition, an NR base station is referred to as a gNodeB or a gNB. That is, the NGR_AN includes one or more gNBs. Further, the EUTR_AN may include a gNB (en-gNB) connected to the core network (EPC) in an LTE communication system (EPS). Similarly, the NGR_AN may include an ng-eNB connected to the core network 5GC in a 5G communication system (5GS). Additionally or alternatively, in a case where the base station is an eNB, a gNB, or the like, the base station device 200 may be referred to as a 3GPP access. Additionally or alternatively, in a case where the base station is a radio access point, the base station device 200 may be referred to as a non-3GPP access. Additionally or alternatively, the base station device 200 may be an optical extension device called a remote radio head (RRH) or a remote radio unit (RRU). Additionally or alternatively, in a case where the base station is a gNB, the base station device 200 may be referred to as any one or a combination of the gNB central unit (CU) and the gNB distributed unit (DU) described above. The gNB central unit (CU) hosts a plurality of upper layers (e.g., RRC, SDAP, and PDCP) among access strata for communication with the terminal device 400. On the other hand, the gNB-DU hosts a plurality of lower layers (e.g., RLC, MAC, and PHY) among access strata. That is, among messages/information transmitted from the base station device 200, RRC signalling (quasi-static notifications) may be generated by the gNB CU, while DCI (dynamic notifications) may be generated by the gNB-DU. Alternatively, among RRC configurations (quasi-static notifications), some configurations such as IE:cellGroupConfig may be generated by the gNB-DU, and the other configurations may be generated by the gNB-CU. These configurations may be transmitted and received through an F1 interface. The base station device 200 may be configured to be able to communicate with other base station devices 200. For example, in a case where the plurality of base station devices 200 are eNBs or a combination of eNBs and en-gNBs, the base station devices 200 may be connected to each other by the X2 interface. Additionally or alternatively, in a case where the plurality of base stations are gNBs or a combination of gn-eNBs and gNBs, the base station devices may be connected to each other by an Xn interface. Additionally or alternatively, in a case where the plurality of base station devices 200 is a combination of gNB central units (CUs) and gNB distributed units (DUs), the base station devices may be connected to each other by the above-described F1 interface. The messages/information transmitted from the base station devices 200 may be communicated between the plurality of base stations (for example, via the X2, Xn, or F1 interface). Furthermore, the base station devices 200 may be integrated access and backhaul (IAB) donor nodes or IAB relay nodes that provide radio access lines and radio backhaul lines by time division multiplexing, frequency division multiplexing, or space division multiplexing.

Cells provided by the base station devices 200 are referred to as serving cells. The serving cells include primary cells (PCells) and secondary cells (SCells). In a case where dual connectivity (e.g., EUTRA-EUTRA dual connectivity, EUTRA-NR dual connectivity (ENDC), EUTRA-NR dual connectivity with 5GC, NR-EUTRA dual connectivity (NEDC), or NR-NR dual connectivity) is provided to the terminal device 400, a PCell and 0 or one or more SCell(s) provided by a master node (MN) are referred to as a master cell group. Further, the serving cells may include PSCells (primary secondary cells or primary SCG cells). That is, in a case where dual connectivity is provided to the terminal device 400, a PSCell and 0 or one or more SCell(s) provided by a secondary node (SN) are referred to as a secondary cell group (SCG). Unless specially configured (e.g., PUCCH on SCell), a physical uplink control channel (PUCCH) is transmitted in the PCell and the PSCell, but is not transmitted in the SCell. In addition, a radio link failure is also detected in the PCell and the PSCell, but is not detected (does not need to be detected) in the SCell. Since the PCell and the PSCell have special roles among the serving cell(s), they are also referred to as special cells (SpCells). One cell may be associated with one downlink component carrier and one uplink component carrier. In addition, a system bandwidth corresponding to one cell may be divided into a plurality of bandwidth parts. In this case, one or more bandwidth parts may be configured in UE, and one bandwidth part may be used as an active BWP for the terminal device 400. In addition, radio resources (e.g., frequency band, numerology (subcarrier spacing), and slot format (slot configuration)) that can be used by the terminal device 400 may be different for each cell, each component carrier, or each BWP. The beam described above may be uniquely identified within one cell or one BWP.

Note that the base station devices 200 may be able to communicate with each other via a base station device-core network interface (e.g., an S1 interface, an NG Interface, or the like). This interface may be wired or wireless.

The base station devices 200 can be used, operated, and/or managed by various entities. Examples of entities may include a mobile network operator (MNO), a mobile virtual network operator (MVNO), a mobile virtual network enabler (MVNE), a neutral host network (NHN) operator, an enterprise, an educational institution (a school foundation, a board of education in each local government, or the like), a real estate (a building, an apartment, or the like) manager, and an individual.

Of course, the entities that use, operate, and/or manage the base station devices 200 are not limited thereto. The base station device 200 may be installed and/or operated by one business operator, or may be installed and/or operated by one individual. Of course, the entities that use and/or operate the base station devices 200 are not limited thereto. For example, the base station device 200 may be installed and/or operated jointly by a plurality of business operators or a plurality of individuals. Furthermore, the base station device 200 may be a shared facility used by a plurality of business operators or a plurality of individuals. In this case, the equipment may be installed and/or operated by a third party other than users.

Note that the concept of the base station device (also referred to as the base station) includes not only a donor base station but also a relay base station (also referred to as a relay station or a relay station device). In addition, the concept of the base station includes not only a structure having a function of the base station but also a device installed in the structure.

For example, the structure is a building such as a skyscraper, a house, a steel tower, a station facility, an airport facility, a harbor facility, or a stadium. Note that the concept of the structure includes not only a building but also a construction (a non-building structure) such as a tunnel, a bridge, a dam, a wall, or an iron pillar, or a facility such as a crane, a gate, or a windmill. In addition, the concept of the structure includes not only a structure on land (on the ground in a narrow sense) or a structure in the ground, but also a structure on water, such as a pier or a mega float, or a structure under water, such as a marine observation facility. The base station device can be reworded as a processing device or an information processing device.

The base station device 200 may be a donor station or a relay station (relay station). Furthermore, the base station device 200 may be a fixed station or a mobile station. The mobile station is a wireless communication device (e.g., a base station device) configured to be movable. At this time, the base station device 200 may be a device installed in a mobile body, or may be a mobile body itself. For example, a relay station device having mobility can be considered to be a base station device 200 as a mobile station. In addition, a device that originally has mobility, such as a vehicle, a drone, or a smartphone, together with functions of a base station device (at least some of the functions of the base station device) also corresponds to a base station device 200 as a mobile station.

Here, the mobile body may be a mobile terminal such as a smartphone or a mobile phone. In addition, the mobile body may be a mobile body (e.g., a vehicle such as an automobile, a bicycle, a bus, a truck, a motorcycle, a train, or a linear motor car) that moves on land (on the ground in a narrow sense), or may be a mobile body (e.g., a subway) that moves in the ground (for example, in a tunnel).

In addition, the mobile body may be a mobile body (e.g., a ship such as a passenger ship, a cargo ship, or a hovercraft) that moves on water, or may be a mobile body (e.g., a submarine ship such as a submersible, a submarine, or an unmanned submarine) that moves under water.

Furthermore, the mobile body may be a mobile body (e.g., an aircraft such as an airplane, an airship, or a drone) that moves inside the atmosphere, or may be a mobile body (e.g., an artificial celestial body such as an artificial satellite, a spacecraft, a space station, or a probe) that moves outside the atmosphere. The mobile body moving outside the atmosphere can be reworded as a space mobile body.

Furthermore, the base station device 200 may be a ground base station device (a ground station device) installed on the ground. For example, the base station device 200 may be a base station device disposed in a structure on the ground, or may be a base station device installed in a mobile body moving on the ground. More specifically, the base station device 200 may be a device including an antenna installed in a structure such as a building and a signal processing device connected to the antenna. Of course, the base station device 200 may be a structure or a mobile body itself. The term "ground" means not only "on land" (on the ground in a narrow sense) but also "in the ground", "on water", and "under water" in a broad sense. Note that the base station device 200 is not limited to the ground base station device. The base station device 200 may be a non-ground base station device (non-ground station device) capable of floating in the air or space. For example, the base station device 200 may be an aircraft station device or a satellite station device.

The aircraft station device is a wireless communication device capable of floating in the atmosphere, such as an aircraft. The aircraft station device may be a device mounted on an aircraft or the like, or may be an aircraft itself. Note that the concept of the aircraft includes not only a heavy aircraft, such as an airplane or a glider, but also a light aircraft, such as a balloon or an airship. In addition, the concept of the aircraft includes a rotorcraft such as a helicopter and an autogyro as well as the heavy aircraft or the light aircraft. Note that the aircraft station device (or an aircraft on which the aircraft station device is mounted) may be an unmanned aerial vehicle such as a drone.

Note that the concept of the unmanned aerial vehicle also includes an unmanned aircraft system (UAS) or a tethered UAS. Furthermore, the concept of the unmanned aerial vehicle also includes a lighter than air (LTA) UAS and a heavier than air (HTA) UAS. Additionally, the concept of the unmanned aerial vehicle also includes a high altitude UAS platform (HAP).

The satellite station device is a wireless communication device capable of floating outside the atmosphere. The satellite station device may be a device mounted on a space mobile body such as an artificial satellite, or may be a space mobile body itself. The satellite serving as a satellite station device may be any one of a low earth orbiting (LEO) satellite, a medium earth orbiting (MEO) satellite, a geostationary earth orbiting (GEO) satellite, and a highly elliptical orbiting (HEO) satellite. Of course, the satellite station device may be a device mounted on a low earth orbiting satellite, a medium earth orbiting satellite, a geostationary earth orbiting satellite, or a highly elliptical orbiting satellite.

A coverage range (e.g., a cell) of the base station device 200 may be wide such as a macro cell or narrow such as a pico cell. Of course, the coverage range of the base station device 200 may be extremely narrow such as a femto cell. In addition, the base station device 200 may have a beamforming capability. In this case, the base station device 200 may form a cell or a service area for each beam.

In another aspect, the base station device 200 may include a set of a plurality of physical or logical devices as follows. For example, in the embodiment of the present disclosure, the base station device 200 may be divided into a plurality of devices, i.e., a baseband unit (BBU) and a radio unit (RU), and may be interpreted as a set of the plurality of devices. Additionally or alternatively, in the embodiment of the present disclosure, the base station device 200 may be either or both of a BBU and an RU. The BBU and the RU may be connected to each other by a predetermined interface (e.g., an eCPRI). Additionally or alternatively, the RU may be referred to as a remote radio unit (RRU) or a radio DoT (RD). Additionally or alternatively, the RU may correspond to the gNB-DU described above. Additionally or alternatively, the BBU may correspond to the gNB-CU described above. Additionally or alternatively, the RU may be a device integrally formed with an antenna. The antenna (e.g., the antenna integrally formed with the RU) included in the base station device 200 may adopt an advanced antenna system to support MIMO (e.g., FD-MIMO) or beamforming. In the advanced antenna system, the antenna (e.g., the antenna integrally formed with the RU) included in the base station device 200 may have, for example, 64 transmission antenna ports and 64 reception antenna ports.

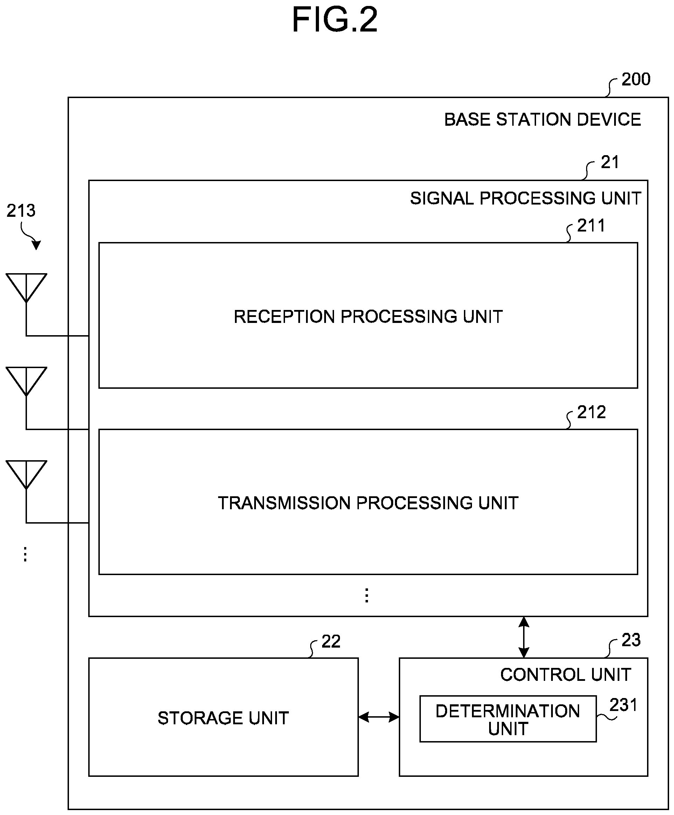

Here, an example of a configuration of the base station device 200 will be described with reference to FIG. 2. FIG. 2 is a diagram illustrating an example of a configuration of the base station device 200 according to an embodiment of the present disclosure. The base station device 200 includes a signal processing unit 21, a storage unit 22, and a control unit 23. Note that the configuration illustrated in FIG. 2 is a functional configuration, and a hardware configuration may be different from the functional configuration. Furthermore, the functions of the base station device 200 may be implemented in a distributed manner by a plurality of physically separated configurations.

The signal processing unit 21 is a signal processing unit for wirelessly communicating with another wireless communication device (e.g., the terminal device 400). The signal processing unit 21 operates according to the control of the control unit 23. The signal processing unit 21 supports one or more radio access schemes. For example, the signal processing unit 21 supports both NR and LTE. The signal processing unit 21 may support W-CDMA and cdma2000 in addition to NR and LTE.

The signal processing unit 21 includes a reception processing unit 211, a transmission processing unit 212, and an antenna 213. The signal processing unit 21 may include a plurality of reception processing units 211, a plurality of transmission processing units 212, and a plurality of antennas 213. Note that, in a case where the signal processing unit 21 supports a plurality of radio access schemes, each unit of the signal processing unit 21 can be configured individually for each radio access scheme. For example, the reception processing unit 211 and the transmission processing unit 212 may be individually configured for LTE and NR.

The storage unit 22 is a storage device capable of reading and writing data, such as a DRAM, an SRAM, a flash memory, or a hard disk. The storage unit 22 functions as a storage means of the base station device 200.

The control unit 23 is a controller that controls each unit of the base station device 200. The control unit 23 is realized, for example, by a processor such as a central processing unit (CPU) or a micro processing unit (MPU). For example, the control unit 23 is realized by the processor executing various programs stored in a storage device inside the base station device 200 using a random access memory (RAM) or the like as a work area. Note that the control unit 23 may be realized by an integrated circuit such as an application specific integrated circuit (ASIC) or a field programmable gate array (FPGA). Any of the CPU, the MPU, the ASIC, and the FPGA can be regarded as a controller.

### <1.3. Example of Configuration of Terminal Device>

The terminal device 400 is a wireless communication device that wirelessly communicates with the base station device 200. For example, the terminal device 400 is a mobile phone, a smart device (a smartphone or a tablet), a personal digital assistant (PDA), or a personal computer. Furthermore, the terminal device 40 may be a device such as a camera for business use having a communication function, or may be a motorcycle, a moving relay vehicle, or the like on which a communication device such as a field pickup unit (FPU) is mounted. Furthermore, the terminal device 40 may be a machine to machine (M2M) device or an Internet of Things (IoT) device. The terminal device 400 is a type of information processing device (communication device).

Furthermore, the terminal device 400 may be capable of sidelink communication with another terminal device 400. The terminal device 400 may be able to use an automatic retransmission technology such as HARQ when performing sidelink communication. Furthermore, the terminal device 400 may be able to perform LPWA communication with another communication device (e.g., the base station device 200 and another terminal device 400). In addition, the wireless communication used by the terminal device 400 may be wireless communication using millimeter waves. Note that the wireless communication (including sidelink communication) used by the terminal device 400 may be wireless communication using radio waves or wireless (optical wireless) communication using infrared light or visible light.

Furthermore, the terminal device 400 may be a mobile device. Here, the mobile device is a movable wireless communication device. At this time, the terminal device 400 may be a wireless communication device installed in a mobile body, or may be a mobile body itself. For example, the terminal device 400 may be a vehicle that moves on a road such as an automobile, a bus, a truck, or a motorcycle, or a wireless communication device mounted on the vehicle. Note that the mobile body may be a mobile terminal, or may be a mobile body that moves on land (on the ground in a narrow sense), in the ground, on water, or under water. Furthermore, the mobile body may be a mobile body that moves inside the atmosphere, such as a drone or a helicopter, or may be a mobile body that moves outside the atmosphere, such as an artificial satellite.

Note that the terminal device 400 is not necessarily a device directly used by a person. The terminal device 400 may be a sensor installed in a machine or the like of a factory like so-called machine type communication (MTC). Furthermore, the terminal device 400 may be a machine to machine (M2M) device or an Internet of Things (IoT) device. Furthermore, the terminal device 400 may be a device having a relay communication function as represented by device to device (D2D) and vehicle to everything (V2X). Furthermore, the terminal device 400 may be a device called a client premises equipment (CPE) used for wireless backhaul or the like.

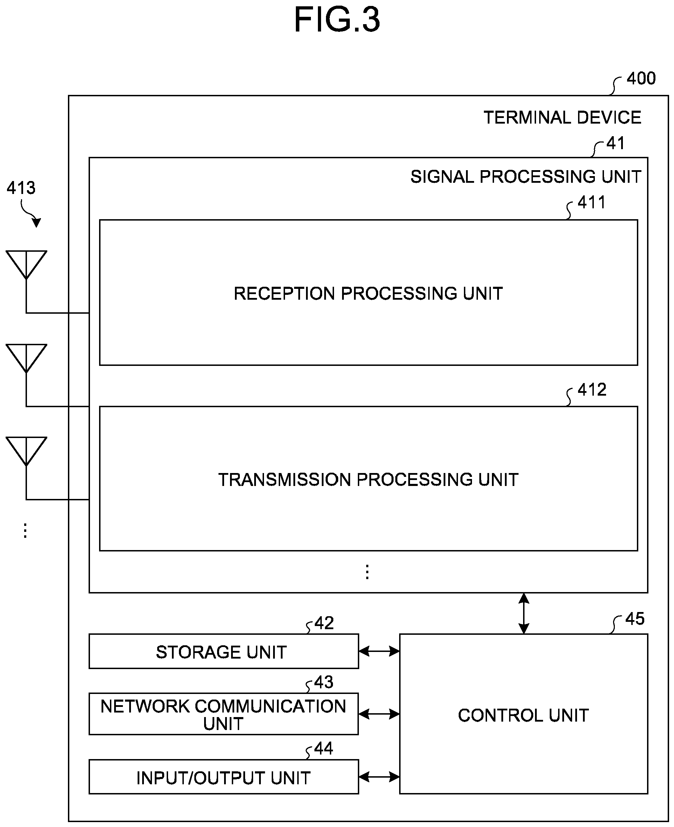

An example of a configuration of the terminal device 400 will be described with reference to FIG. 3. FIG. 3 is a diagram illustrating an example of a configuration of the terminal device 400 according to an embodiment of the present disclosure. The terminal device 400 includes a signal processing unit 41, a storage unit 42, a network communication unit 43, an input/output unit 44, and a control unit 45. Note that the configuration illustrated in FIG. 3 is a functional configuration, and a hardware configuration may be different from the functional configuration. Furthermore, the functions of the terminal device 400 may be implemented in a distributed manner by a plurality of physically separated configurations.

The signal processing unit 41 is a signal processing unit for wirelessly communicating with another wireless communication device (e.g., the base station device 200). The signal processing unit 41 operates according to the control of the control unit 45. The signal processing unit 41 supports one or more radio access schemes. For example, the signal processing unit 41 supports both NR and LTE. The signal processing unit 41 may support W-CDMA and cdma2000 in addition to NR and LTE.

The signal processing unit 41 includes a reception processing unit 411, a transmission processing unit 412, and an antenna 413. The signal processing unit 41 may include a plurality of reception processing units 411, a plurality of transmission processing units 412, and a plurality of antennas 413. Note that, in a case where the signal processing unit 41 supports a plurality of radio access schemes, each unit of the signal processing unit 41 can be configured individually for each radio access scheme. For example, the reception processing unit 411 and the transmission processing unit 412 may be individually configured for LTE and NR.

The storage unit 42 is a storage device capable of reading and writing data, such as a DRAM, an SRAM, a flash memory, or a hard disk. The storage unit 42 functions as a storage unit of the terminal device 400.

The network communication unit 43 is a communication interface for communicating with another device. For example, the network communication unit 43 is a LAN interface such as an NIC. The network communication unit 43 may be a wired interface or a wireless interface. The network communication unit 43 functions as a network communication means of the terminal device 400. The network communication unit 43 communicates with another device according to the control of the control unit 45.

The input/output unit 44 is a user interface for exchanging information with a user. For example, the input/output unit 44 is an operation device for the user to perform various operations, such as a keyboard, a mouse, an operation key, or a touch panel. Alternatively, the input/output unit 44 is a display device such as a liquid crystal display or an organic electroluminescence display. The input/output unit 44 may be an acoustic device such as a speaker or a buzzer. The input/output unit 44 may be a lighting device such as a light emitting diode (LED) lamp. The input/output unit 44 functions as an input/output means (an input means, an output means, an operation means, or a notification means) of the terminal device 400.

The control unit 45 is a controller that controls each unit of the terminal device 40. The control unit 45 is realized, for example, by a processor such as a CPU or an MPU. For example, the control unit 45 is realized by the processor executing various programs stored in a storage device inside the terminal device 400 using a RAM or the like as a work area. Note that the control unit 45 may be realized by an integrated circuit such as an ASIC or an FPGA. Any of the CPU, the MPU, the ASIC, and the FPGA can be regarded as a controller.

### <<2. Error Correction Coding>>

Next, error correction coding according to an embodiment of the present disclosure will be described. In the system according to an embodiment of the present disclosure, the base station device 200 and the terminal device 400 perform communication using a plurality of error correction (forward error correction (FEC)) codes. Here, the description will be made for a case in which the base station device 200 and the terminal device 400 use two error correction codes, i.e. a first FEC code and a second FEC code, but the number of error correction codes may be three or more. Note that, in the present embodiment, the description will be made assuming that a transmission side performs first FEC encoding and then performs second FEC encoding.

### <2.1. First FEC>

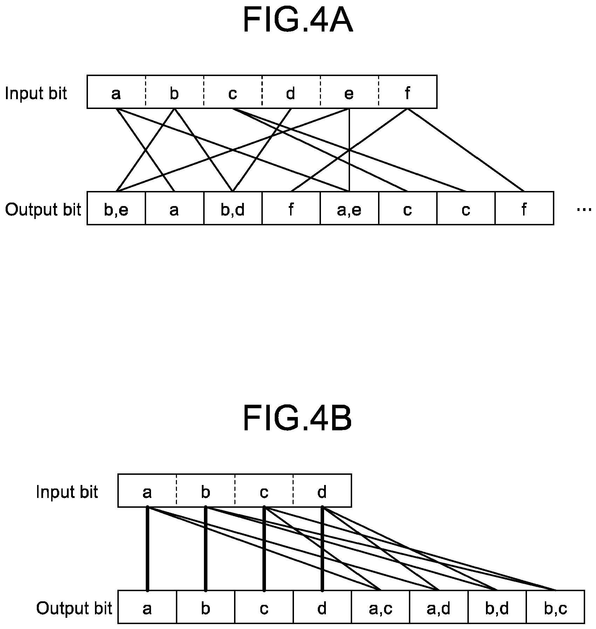

First, error correction coding applied as first FEC in the system according to an embodiment of the present disclosure will be described with reference to FIGS. 4A and 4B. FIGS. 4A and 4B are diagrams for explaining an overview of the first FEC according to an embodiment of the present disclosure.

As illustrated in FIG. 4A, the first FEC is error correction coding for generating one or more bit sequences from one bit sequence. For example, it is assumed that an input bit sequence is a bit sequence represented by {a, b, c, d, e, f}. In this case, an output in a case where first FEC is applied is a bit sequence group including a plurality of bit sequences, such as {b, e}, {a}, {b, d}, {f}, {a, e}, {c}, {c}, {f}, ... Here, for example, the plurality of bit sequences (e.g., {b, e}, {b, d}, and {a, e}) may be bit sequences in each of which at least some parts of the input bit sequence are sequentially arranged. Alternatively, the plurality of bit sequences may be obtained by performing bit operations such as AND, OR, XOR, and NOT on at least some parts of the input bit sequence.

In addition, the first FEC may generate an output bit sequence group as illustrated in FIG. 4B, and at this time, the output bit sequence group may include a first bit sequence group that is necessarily transmitted by the transmission side and a second bit sequence group that can be decoded by the reception side although not transmitted by the transmission side. In other words, the first bit sequence group is a bit sequence group that includes an input bit sequence and can be decoded by the reception side without performing first FEC decoding. The second bit sequence group is a bit sequence group including at least one part of the input bit sequence, and is combined with the first bit sequence group for use in first FEC decoding on the reception side. For example, in FIG. 4B, a bit sequence group including first to fourth bit sequences from the left corresponds to the first bit sequence group, and the other bit sequences correspond to the second bit sequence group.

Table 1 is a table showing examples of first FEC codes. As shown in Table 1, it is preferable to use an FEC code such as an erasure code, a rateless code, or a fountain code as the first FEC code having the above-described feature. Alternatively, it is preferable to use, as the first FEC code, an FEC code for coding a plurality of bit sequences by linear synthesis or XOR synthesis.

**Table 1**

| Example of first FEC code |
|---|
| Erasure code |
| Rateless code |
| Fountain code |
| Tornado code |
| LT code |
| Raptor code |
| RaptorQ code |
| XOR code |

### <2.2. Second FEC>

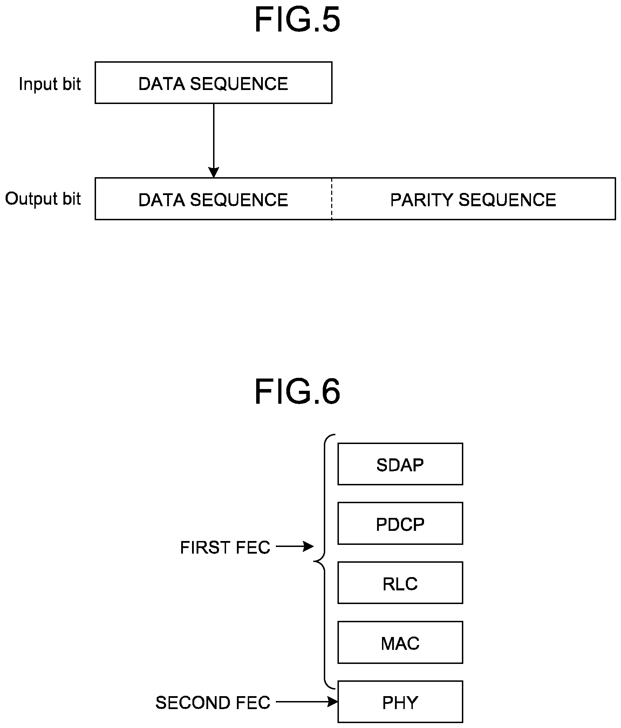

Next, error correction coding applied as second FEC in the system according to an embodiment of the present disclosure will be described with reference to FIG. 5.

FIG. 5 is a diagram for explaining an overview of second FEC according to an embodiment of the present disclosure.

As illustrated in FIG. 5, the second FEC is error correction coding for generating one bit sequence from one bit sequence. For example, as illustrated in FIG. 5, the transmission side adds a parity sequence to one input bit sequence including a data sequence to output one output bit sequence.

For example, in a case where second FEC is performed on the bit sequence group to which the first FEC is applied as illustrated in FIG. 4, the transmission side adds a parity sequence to each of the bit sequences included in the bit sequence group to generate an output bit sequence group. More specifically, it is assumed that the transmission side performs second FEC on a bit sequence group such as {b, e}, {a}, {b, d}, {f}, {a, e}, {c}, {c}, {f},... In this case, the transmission side assigns a parity sequence w1 to {b, e} to generate an output bit sequence {b, e, w1}. The transmission side similarly assigns parity sequences w2,... to {a}, {b, d}, {f}, {a, e}, {c}, {c}, {f},..., to generate an output bit sequence group including {a, w2}, {b, d, w3}, {f, w4}, {a, e, w5}, {c, w6}, {c, w7}, {f, w8},...

Table 2 is a table showing examples of second FEC codes. As shown in Table 2, it is preferable to use, as the second FEC code having the above-described feature, an FEC code such as a convolutional code, a turbo code, a low density parity check (LDPC) code, or a polar code.

**Table 2**

| Example of second FEC code |
|---|
| Convolutional code |
| Turbo code |
| LDPC code |
| Polar code |

### <2.3. FEC Processing>

### (Protocol Stack)

FIG. 6 is a diagram illustrating an example of a protocol stack to which first FEC and second FEC are applied according to an embodiment of the present disclosure. As an example of the protocol stack, 5G New Radio (NR) is illustrated in FIG. 6.

The protocol stack for NR control information communication includes, from the lower layer, a physical (PHY) layer, a media access control (MAC) layer, a radio link control (RLC) layer, a packet data convergence protocol (PDCP) layer, and a service data adaptive protocol (SDAP) layer.

In the SDAP layer, an identifier indicating quality of service (QoS) is notified. In the PDCP layer, compressing and decompressing an IP header, encryption, data replication, etc. are performed. In the RLC layer, controls for combining, dividing, and retransmitting data, etc. are performed.

In the MAC layer, channel multiplexing, channel demultiplexing, hybrid-automatic repeat request (ARQ) processing, scheduling, prioritization, etc. are performed. In the PHY layer, modulation/demodulation, error correction coding, multi-antenna processing, resource allocation, etc. are performed.

Here, the first FEC according to the present embodiment is performed in a layer (any one of the MAC layer, the RLC layer, the PDCP layer, and the SDAP layer) upper than the PHY layer. In addition, the second FEC is applied for the error correction coding in the PHY layer described above. In this manner, the second FEC is performed in the PHY layer.

Note that the protocol stack illustrated in FIG. 6 is an example, and the present invention is not limited thereto. The first FEC and the second FEC may be applied to a protocol stack other than what is illustrated in FIG. 6.

### (Transmission Processing)

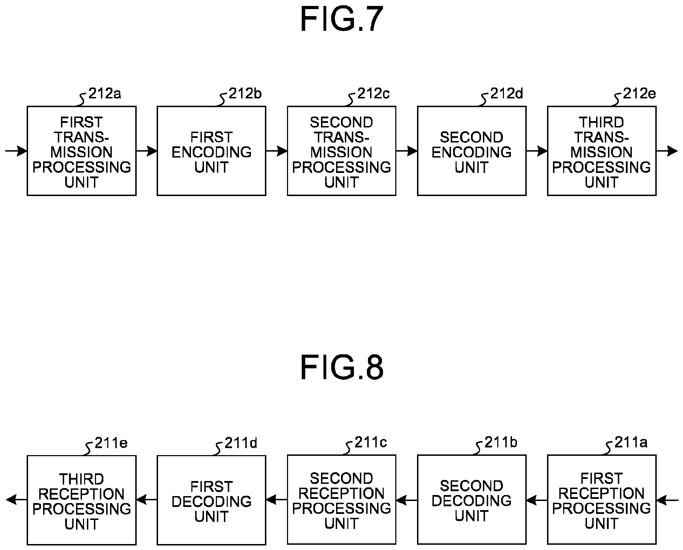

Next, an example of transmission processing according to an embodiment of the present disclosure will be described with reference to FIG. 7. FIG. 7 is a diagram illustrating an example of a configuration of the transmission processing unit 212 of the base station device 200 according to an embodiment of the present disclosure. Here, the transmission processing performed by the transmission processing unit 212 of the base station device 200 will be described, but the transmission processing unit 412 of the terminal device 400 also performs similar processing.

The transmission processing unit 212 includes a first transmission processing unit 212a, a first encoding unit 212b, a second transmission processing unit 212c, a second encoding unit 212d, and a third transmission processing unit 212e. Note that the configuration illustrated in FIG. 7 is a functional configuration, and a hardware configuration may be different from the functional configuration.

The first encoding unit 212b performs first error correction encoding processing (first FEC) on one or more input data sequences to generate a group including one or more output data sequences.

The second encoding unit 212d performs second error correction encoding processing (second FEC) on one input data sequence to generate one output data sequence. When the transmission processing unit 212 performs the first FEC, a plurality of output data sequences (an output data sequence group) is input to the second encoding unit 212d. In this case, the second encoding unit 212d performs second FEC on each of the plurality of output data sequences input thereto to generate each output data sequence.

The signal processing performed by the first transmission processing unit 212a and the second transmission processing unit 212c is determined depending on what layer of the protocol stack illustrated in FIG. 6 the first FEC is performed in. For example, in a case where the first FEC is performed after data replication in the PDCP layer, the first transmission processing unit 212a performs signal processing performed in the SDAP layer, processing performed before the data replication in the PDCP layer, etc. Furthermore, the second transmission processing unit 212c performs processing performed in the RLC layer and the MAC layer, processing performed before error correction encoding processing in the PHY layer, etc.

The third transmission processing unit 212e performs processing performed after the error correction encoding processing in the PHY layer, etc.

The transmission processing unit 212 generates a first transmission signal obtained by performing the first FEC and the second FEC, and transmits the first transmission signal to the terminal device 400 that is a communication counterpart via the antenna 213. Note that the signal processing unit 21 and the antenna 213 illustrated in FIG. 2 are an example of a communication unit.

Note that the base station device 200 according to an embodiment of the present disclosure may not perform first FEC while performing second FEC, which will be described in detail later. In this case, the transmission processing unit 212 does not perform processing in the first encoding unit 212b, while performing transmission signal processing in the first transmission processing unit 212a, and then performing transmission signal processing in the second transmission processing unit 212c. In this manner, the transmission processing unit 212 generates a second transmission signal obtained by performing the second FEC, and transmits the second transmission signal to the terminal device 400 that is a communication counterpart via the antenna 213.

### (Reception Processing)

Next, an example of reception processing according to an embodiment of the present disclosure will be described with reference to FIG. 8. FIG. 8 is a diagram illustrating an example of a configuration of the reception processing unit 211 of the base station device 200 according to an embodiment of the present disclosure. Here, the reception processing performed by the reception processing unit 211 of the base station device 200 will be described, but the reception processing unit 411 of the terminal device 400 also performs similar processing. The reception processing unit 211 receives, as a first reception signal, the first transmission signal obtained by performing the second FEC and the first FEC via the antenna 213. Similarly, the reception processing unit 211 receives, as a second reception signal, the second transmission signal obtained by performing the second FEC.

First, the processing of receiving the first reception signal will be described.

The reception processing unit 211 includes a first reception processing unit 211a, a second decoding unit 211b, a second reception processing unit 211c, a first decoding unit 211d, and a third reception processing unit 211e. Note that the configuration illustrated in FIG. 8 is a functional configuration, and a hardware configuration may be different from the functional configuration.

The second decoding unit 211b performs second error correction decoding processing on one input sequence to which the second FEC is applied to generate one output sequence.

The first decoding unit 211d performs first error correction decoding processing on one or more input sequences to which the first FEC is applied to generate one or more output sequences.

The first reception processing unit 211a performs reception processing performed before the second error correction decoding processing, etc.

The signal processing performed by the second reception processing unit 211c and the third reception processing unit 211e is determined depending on what layer of the protocol stack on the transmission side the first FEC is performed on the reception signal in. The second reception processing unit 211c performs reception signal processing after the second error correction decoding processing and before the first error correction decoding processing. The third reception processing unit 211e performs reception signal processing after the first error correction decoding processing.

Note that the reception processing unit 211 does not perform processing in the first decoding unit 211d on the second reception signal, while performing reception signal processing in the second reception processing unit 211c, and then performing reception signal processing in the third reception processing unit 211e.

By applying the first FEC and the second FEC as described above, the system is capable of achieving more highly reliable communication, but there may be an increase in delay of processing due to an increase in signal processing amount. In addition, when the first FEC is applied to the system, it is necessary to consider what layer (the PHY layer, the MAC layer, the RLC layer, the PDCP layer, the SDAP layer, or the like) the first FEC is to be applied into under what conditions.

In the system according to an embodiment of the present disclosure, by switching between application and non-application of first FEC so that the first FEC is not applied in an unnecessary case, it is possible to suppress an increase in signal processing amount, in other words, an increase in delay of signal processing, while achieving more highly reliable communication.

### <<3. Determination as to Switching>>

As described above, in the system according to an embodiment of the present disclosure, a switch is made between execution of first FEC and non-execution of first FEC. In other words, the base station device 200 transmits a first transmission signal or a second transmission signal in a switchable manner. Such switching is determined mainly by a determination unit 231 of the control unit 23 of the base station device 200. The processing of determination as to switching by the determination unit 231 will be described below.

### (QoS Level)

The determination unit 231 determines whether to perform first FEC depending on communication quality required for a signal to be transmitted. For example, the determination unit 231 determines to perform first FEC when a value of QoS (e.g., 5G QoS identifier (5QI)) is a predetermined value, and determines not to perform first FEC when the value is not the predetermined value.

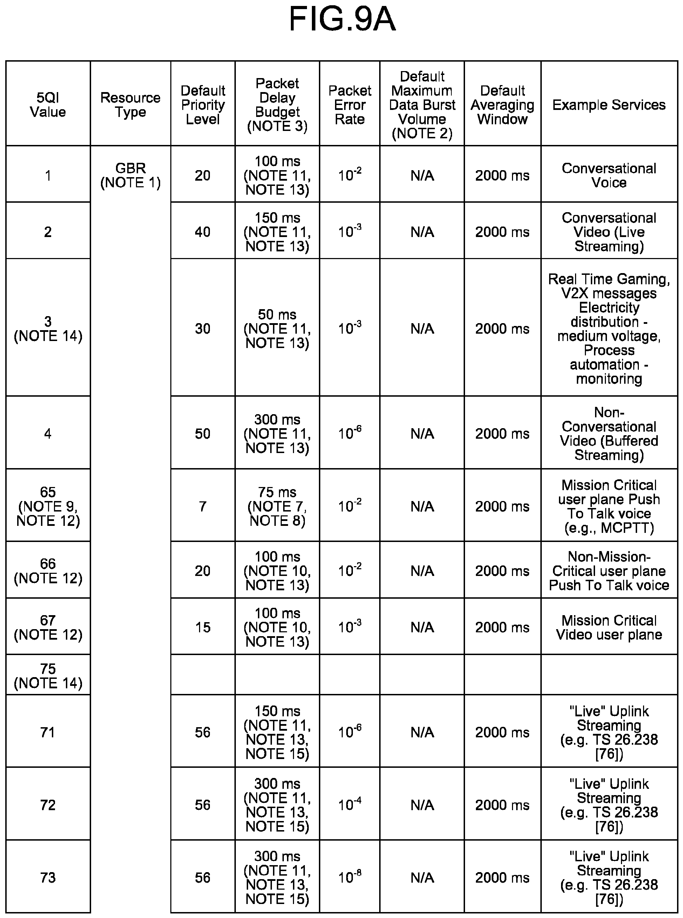

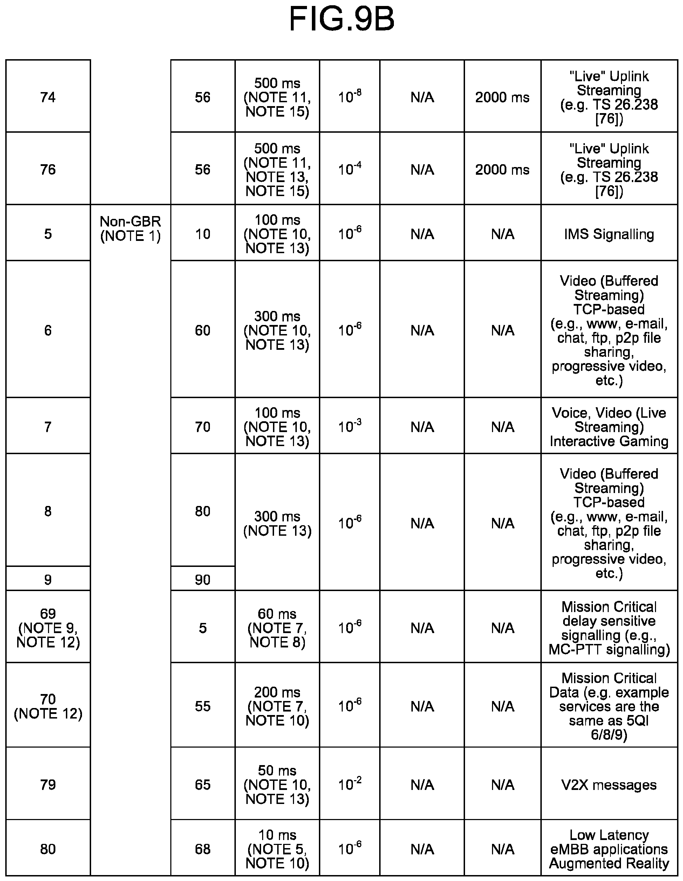

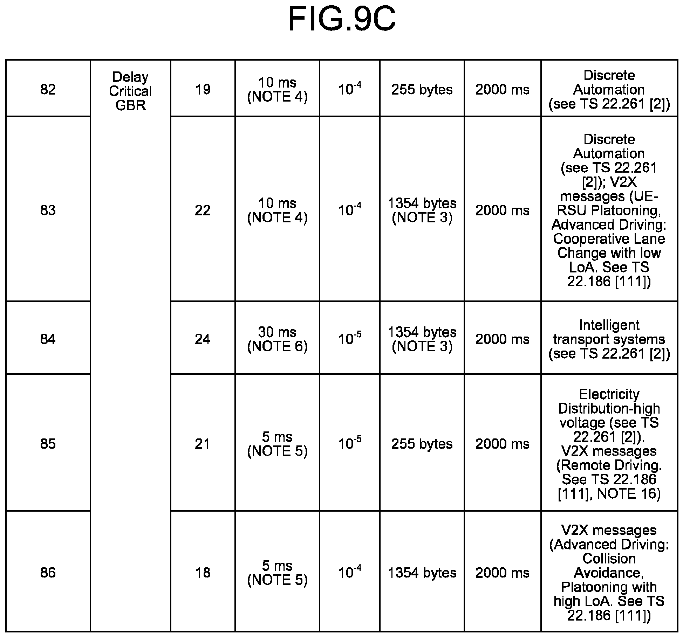

FIGS. 9A to 9C are tables for explaining examples of 5QI. Note that the 5QI charts illustrated in FIGS. 9A to 9C are partially extracted from TS23.501. As illustrated in FIGS. 9A to 9C, communication quality required for a signal to be transmitted is defined for each 5QI value. Therefore, whether to perform first FEC is determined in advance, for example, for each 5QI value. The determination unit 231 determines whether to perform first FEC according to the determination.

Note that, in addition to the above-described 5 QI Value, the determination unit 231 may determine whether to perform first FEC, for example, depending on a requested packet error rate or an allowable delay time. For example, the determination unit 231 determines to perform first FEC when the requested packet error rate is lower than a predetermined value, and determines not to perform first FEC when the requested packet error rate is equal to or higher than the predetermined value. Alternatively, the determination unit 231 determines to perform first FEC when the allowable delay time is equal to or longer than a predetermined time, and determines not to perform first FEC when the allowable delay time is shorter than the predetermined time.

In this manner, the determination unit 231 determines whether to perform first FEC depending on communication quality required for communication.

### (Data Replication)

The determination unit 231 determines whether to perform first FEC depending on whether to replicate a transmission data sequence. For example, in a mode in which a transmission data sequence is replicated, the determination unit 231 determines that the condition for performing first FEC is satisfied. The replication of the transmission data sequence is performed, for example, in the PDCP layer (see FIG. 6) in the above-described example, but may be performed in a layer other than the PDCP layer.

In the mode in which a transmission data sequence is replicated, it is expected that the transmission data sequence may be transmitted with high reliability. Therefore, in an embodiment of the present disclosure, in order to further improve reliability, the base station device 200 performs first FEC on a transmission data sequence in addition to the replication of the transmission data sequence. By performing the first FEC together with the data replication as described above, the base station device 200 is capable of achieving more highly reliable communication.

Note that the base station device 200 may perform, after replicating transmission data sequences, first FEC on at least one of the replicated transmission data sequences, or may replicate at least one of a plurality of bit sequences obtained by performing the first FEC.

Note that, since reliability of communication can be improved by performing first FEC, even in the mode in which a transmission data sequence is replicated, the base station device 200 may omit the replication of the transmission data sequence, by performing the first FEC.

In this case, the base station device 200 performs first FEC without replicating the transmission data sequence. The base station device 200 divides a plurality of bit sequences obtained by performing the first FEC into a plurality of bit sequence groups, and transmits the bit sequence groups through different links, respectively.

By omitting replication as described above, the base station device 200 is capable of reducing a signal processing amount.

### (ARQ Processing)

The determination unit 231 determines whether to perform first FEC depending on retransmission processing. For example, in a mode in which ARQ processing is performed as retransmission processing (e.g., an acknowledged mode (AM) in the RLC layer), the determination unit 231 determines that the condition for performing first is satisfied.

In a case where retransmission is performed by ARQ processing, the base station device 200 usually transmits a packet that is identical to a packet that the reception side has failed to receive. Similarly, in the present embodiment, the base station device 200 may perform first FEC on both an initially transmitted packet (initial transmission packet) and a retransmission packet, such that the packets subjected to the first FEC are transmitted.

Alternatively, the base station device 200 may perform first FEC on the retransmission packet, while not performing first FEC on the initial transmission packet. At this time, the base station device 200 may transmit, as a retransmission packet, all or some of a plurality of data sequences obtained by performing second FEC.

When transmitting some of the data sequences, the base station device 200 transmits a second bit sequence group to be combined with a first bit sequence group on the reception side for use in first FEC decoding, not the first bit sequence group that can be decoded without performing first FEC decoding on the reception side. The initial transmission packet includes the same information as the first bit sequence group. Therefore, the base station device 200 transmits the second bit sequence group as a retransmission packet, such that the reception side can perform first error correction decoding processing using the initial transmission packet and the second bit sequence group.

As a result, the base station device 200 is capable of further improving reliability of packet transmission and suppressing an increase in communication volume.

### (NACK Signal)

The determination unit 231 determines whether to perform first FEC depending on whether or not data sequences are to be transmitted as a retransmission packet. For example, when receiving NACK from the reception side, the determination unit 231 determines to perform first FEC.

The base station device 200 transmits a plurality of bit sequences obtained by performing first FEC on the transmission data sequences as a retransmission packet. At this time, the base station device 200 may transmit, as a retransmission packet, all or some of a plurality of data sequences obtained by performing second FEC.

When transmitting some of the data sequences, the base station device 200 transmits a second bit sequence group to be combined with a first bit sequence group on the reception side for use in first FEC decoding, not the first bit sequence group that can be decoded without performing first FEC decoding on the reception side.

At this time, the base station device 200 performs first FEC on transmission data sequences at the time of initial transmission and generates a first bit sequence group and a second bit sequence group. The base station device 200 transmits the first bit sequence group as an initial transmission packet.

The first bit sequence group is a data sequence group that can be decoded without performing first FEC decoding. Therefore, when the reception side can decode the data from the initial transmission packet without performing first FEC decoding processing (first error correction decoding processing), the reception side does not request retransmission.

On the other hand, when the reception side cannot decode the initial transmission packet and fails to receive the initial transmission packet, the reception side requests retransmission, and the base station device 200 transmits a second bit sequence group as a retransmission packet. At this time, the base station device 200 notifies that second FEC has been performed on the retransmission packet, together with the transmission of the retransmission packet.

As a result, the reception side can perform first FEC decoding processing using the first bit sequence group of the initial transmission packet and the second bit sequence group of the retransmission packet. Therefore, the base station device 200 is capable of further improving reliability of packet transmission and suppressing an increase in communication volume.

### (Timeout)

The determination unit 231 may determine to perform first FEC in a case where there is no response from the reception side for a certain period of time. In a case where there is no response from the reception side for a certain period of time, there is a possibility, for example, that the reception side has failed to receive control information for receiving an initial transmission packet. Alternatively, there is a possibility that the base station device 200 has failed to receive ACK/NACK from the reception side.

Therefore, the determination unit 231 determines to perform first FEC, for example, in a case where there is no response for a certain period of time after the initial transmission packet is transmitted. In this case, the base station device 200 transmits a retransmission packet, similarly to the case where NACK is received from the reception side. At this time, as described above, the base station device 200 may transmit a first bit sequence group as the initial transmission packet and a second bit sequence group as the retransmission packet.

### (Capability of Reception Side)

The determination unit 231 determines whether to perform the first FEC depending on the capability of the reception side (e.g., the terminal device 400). For example, the determination unit 231 determines to perform first FEC, when the terminal device 400 supports the first FEC, in other words, when the terminal device 400 is capable of decoding a first transmission signal on which first FEC has been performed.

On the other hand, the determination unit 231 determines not to perform first FEC, when the terminal device 400 does not support first FEC, in other words, when the terminal device 400 is not capable of decoding a first transmission signal.

Note that the base station device 200 is notified of whether or not the terminal device 400 supports first FEC from the terminal device 400 as information on the capability of the terminal device 400.

The base station device 200 determines whether to perform first FEC on the basis of the information on the capability of the terminal device 400, and notifies the terminal device 400 of a determination result.

When the terminal device 400 (or the base station device 200) does not support first FEC, the base station device 200 transmits a notification indicating that first FEC is not performed to the terminal device 400.

On the other hand, when the terminal device 400 and the base station device 200 support first FEC, the base station device 200 determines whether to perform first FEC, and notifies the terminal device 400 of a determination result.

Note that, when first FEC is not performed, the base station device 200 may omit a notification. That is, when there is no notification from the base station device 200, the terminal device 400 determines that first FEC is not performed.

### (Propagation Path)

The determination unit 231 determines to perform first FEC when transmission signals are transmitted through different propagation paths. The propagation paths include carriers, links, resources, or the like. When transmission signals are transmitted through different propagation paths, the base station device 200 transmits the transmission signals through different carriers, different links, or different resources, respectively.

### [Carrier Aggregation]

When carrier aggregation (CA) is valid as an example in which signals are transmitted through different propagation paths, the determination unit 231 determines that the condition for performing first FEC is satisfied.

In this case, the base station device 200 transmits a plurality of data sequences obtained by performing first FEC through different carriers, respectively. For example, among the plurality of data sequences obtained by performing the first FEC, the base station device 200 transmits a first bit sequence through a carrier C1, transmits a second bit sequence through a carrier C2, and transmits an Nth bit sequence through a carrier CN. The reception side decodes the data sequences using the plurality of bit sequences received through the plurality of carriers C1 to CN. At this time, the base station device 200 may notify the reception side of information indicating which bit sequence is transmitted through which carrier C.

Note that the base station device 200 may divide the plurality of data sequences obtained by performing the first FEC into a plurality of data sequence groups, and transmit the plurality of data sequence groups through different carriers, respectively. For example, the base station device 200 may divide the plurality of data sequences obtained by performing the first FEC into a first bit sequence group and a second bit sequence group, and transmit the first bit sequence group and the second bit sequence group through different carriers, respectively.

### [Dual Connectivity]

When dual connectivity (DC) is valid as an example in which signals are transmitted through different propagation paths, the determination unit 231 determines that the condition for performing first FEC is satisfied.

In this case, the base station device 200 transmits a plurality of data sequences obtained by performing first FEC through different links, respectively.

For example, among the plurality of data sequences obtained by performing the first FEC, the base station device 200 transmits a first bit sequence from a first base station device 200, transmits a second bit sequence from a second base station device 200, and transmits an Nth bit sequence from an Nth base station device 200. The reception side decodes the data sequences using the plurality of bit sequences received through the plurality of base station devices 200. At this time, the base station device 200 operating as a master may notify the reception side of information indicating which bit sequence is transmitted from which base station device 200.

Note that the base station device 200 may divide the plurality of data sequences obtained by performing the first FEC into a plurality of data sequence groups, and transmit the plurality of data sequence groups from different base station devices 200, respectively. For example, the base station device 200 may divide the plurality of data sequences obtained by performing the first FEC into a first bit sequence group and a second bit sequence group, and transmit the first bit sequence group and the second bit sequence group from different base station devices 200, respectively.

### [Band Width Part (BWP)]

When signals can be transmitted by simultaneously using a plurality of BWPs as an example in which signals are transmitted through different propagation paths, the determination unit 231 determines that the condition for performing first FEC is satisfied.

In this case, the base station device 200 transmits a plurality of data sequences obtained by performing first FEC through different BMPs, respectively.

For example, among the plurality of data sequences obtained by performing the first FEC, the base station device 200 transmits a first bit sequence through a first BWP, transmits a second bit sequence through second BWP, and transmits an Nth bit sequence through an Nth BWP. The reception side decodes the data sequences using the plurality of bit sequences received through the plurality of BMPs. At this time, the base station device 200 may notify the reception side of information indicating which bit sequence is transmitted through which BMP.

Note that the base station device 200 may divide the plurality of data sequences obtained by performing the first FEC into a plurality of data sequence groups, and transmit the plurality of data sequence groups through different BMPs, respectively. For example, the base station device 200 may divide the plurality of data sequences obtained by performing the first FEC into a first bit sequence group and a second bit sequence group, and transmit the first bit sequence group and the second bit sequence group through different BMPs, respectively.

### (BWP)

The determination unit 231 determines whether to perform first FEC depending on which BWP is to be used.

The determination unit 231 determines that the base station device 200 performs first FEC on the data sequences to be transmitted by using a first BWP, and the base station device 200 does not perform first FEC on the data sequences to be transmitted by using a second BWP.

### (Channel)

The determination unit 231 determines whether to perform first FEC depending on a channel. The channel includes a logical channel, a transport channel, a physical channel, or the like.

### [Logical Channel]

The determination unit 231 determines to perform first FEC on a signal to be transmitted or received through a predetermined logical channel, and determines not to perform first FEC on a signal to be transmitted or received through a logical channel other than the predetermined logical channel.

For example, the determination unit 231 may determine to perform first FEC on a signal to be transmitted or received through a data channel such as BCCH, PCCH, CCCH, DCCH, or DTCH.

For example, the determination unit 231 determines to perform first FEC on a signal to be transmitted or received through the DTCH, and determines not to perform first FEC on a signal to be transmitted or received through a logical channel other than the DTCH.

In this case, the base station device 200 transmits a first transmission signal on which first FEC is performed through the DTCH, and transmits a second transmission signal on which first FEC is not performed through a logical channel other than the DTCH. In addition, the base station device 200 receives a first reception signal on which the first FEC is performed through the DTCH, and receives a second reception signal on which the first FEC is not performed through a logical channel other than the DTCH.

Alternatively, the determination unit 231 may determine to perform first FEC on a signal to be transmitted or received through a control logical channel.

### [Transport Channel]

The determination unit 231 determines to perform first FEC on a signal to be transmitted or received through a predetermined transport channel, and determines not to perform first FEC on a signal to be transmitted or received through a transport channel other than the predetermined transport channel.

For example, the determination unit 231 may determine to perform first FEC on a signal to be transmitted or received through a channel such as BCH, DL-SCH, UL-SCH, or PCH.

For example, the determination unit 231 determines to perform first FEC on a signal to be transmitted or received through the DL-SCH or the UL-SCH, and determines not to perform first FEC on a signal to be transmitted or received through a transport channel other than the DL-SCH and the UL-SCH.

In this case, the base station device 200 transmits a first transmission signal on which first FEC is performed through the DL-SCH or the UL-SCH, and transmits a second transmission signal on which first FEC is not performed through a transport channel other than the DL-SCH and the UL-SCH. Also, the base station device 200 receives a first reception signal on which first FEC is performed through the DL-SCH or the UL-SCH, and receives a second reception signal on which first FEC is not performed through a transport channel other than the DL-SCH and the UL-SCH.

### [Physical Channel]

The determination unit 231 determines to perform first FEC on a signal to be transmitted or received through a predetermined physical channel, and determines not to perform first FEC on a signal to be transmitted or received through a physical channel other than the predetermined physical channel.

For example, the determination unit 231 may determine to perform first FEC on a signal to be transmitted or received through a channel such as PBCH, PDCCH, PUCCH, PSCCH, PDSCH, PUSCH, PSSCH, or PRACH.

For example, the determination unit 231 determines to perform first FEC on a signal to be transmitted or received through the PDSCH, the PUSCH, or the PSSCH, and determines not to perform first FEC on a signal to be transmitted or received through a physical channel other than the PDSCH, the PUSCH, and the PSSCH.

In this case, the base station device 200 transmits a first transmission signal on which first FEC is performed through the PDSCH, the PUSCH, or the PSSCH, and transmits a second transmission signal on which first FEC is not performed through a physical channel other than the PDSCH, the PUSCH, and the PSSCH. Also, the base station device 200 receives a first reception signal on which first FEC is performed through the PDSCH, the PUSCH, or the PSSCH, and receives a second reception signal on which first FEC is not performed through a physical channel other than the PDSCH, the PUSCH, and the PSSCH.

### (Configured Grant Transmission)

The determination unit 231 determines to perform first FEC when uplink or sidelink communication (e.g., configured grant or the like) is performed using control information quasi-statically notified in advance.

For example, in the configured grant, communication is performed using control information notified quasi-statically. The communication using the control information notified quasi-statically may be inferior in channel state trackability compared to a case where the control information is notified dynamically. In this case, uplink or sidelink transmission is performed using a non-optimal transmission parameter, and thus, it is highly likely that communication may fail.

At this point, in the present embodiment, the determination unit 231 determines to perform first FEC for uplink or sidelink communication performed using control information that is quasi-statically notified in advance. As a result, even though communication is performed using a non-optimal transmission parameter, an error can be corrected by first FEC, thereby making it possible to perform the communication more reliably.

### (Initial Access)

The determination unit 231 may determine to perform first FEC when data is transmitted at the time of initial access.

When data is transmitted at the time of initial access, the transmission side may transmit data using a transmission parameter notified quasi-statically in advance. The communication using the control information notified quasi-statically may be inferior in channel state trackability compared to a case where the control information is notified dynamically. In this case, data is transmitted using a non-optimal transmission parameter, and thus, it is highly likely that communication may fail.

At this point, in the present embodiment, the determination unit 231 determines to perform first FEC when data is transmitted at the time of initial access. As a result, even though communication is performed using a non-optimal transmission parameter, an error can be corrected by first FEC, thereby making it possible to perform the communication more reliably.

For example, the determination unit 231 determines to perform first FEC in the case of 2-step RACH, and determines not to perform first FEC in the case of 4-step RACH. Alternatively, the determination unit 231 may switch between execution of first FEC and non-execution of first FEC even in the case of 2-step RACH.

### (RRC State)

The determination unit 231 may determine whether to perform first FEC depending on a state transition of the radio resource control (RRC) of the terminal device 400.

The determination unit 231 determines to perform first FEC when the RRC state transitions to RRC-Connected. Examples of cases where the RRC state transitions to the RRC-Connected include a case where the RRC state transitions from RRC-Inactive to RRC-Connected and a case where the RRC state transitions from RRC-Idle to RRC-Connected. RRC-Inactive and RRC-Idle are also collectively referred to as an unconnected state.

When the terminal device 400 transmits data from the unconnected state, data may be transmitted using a transmission parameter quasi-statically notified in advance. The communication using the control information notified quasi-statically may be inferior in channel state trackability compared to a case where the control information is notified dynamically. In this case, data is transmitted using a non-optimal transmission parameter, and thus, it is highly likely that communication may fail.

At this point, in the present embodiment, the determination unit 231 determines to perform first FEC when data is transmitted from the unconnected state. As a result, even though communication is performed using a non-optimal transmission parameter, an error can be corrected by first FEC, thereby making it possible to perform the communication more reliably.

### (Multiple Transmission Targets)

The determination unit 231 may determine to perform first FEC when transmission data sequences are transmitted to a plurality of destinations.

The determination unit 231 determines to perform first FEC, for example, when data is transmitted in broadcast or multicast.

When data is transmitted in broadcast or multicast, the data may be transmitted to a plurality of terminal devices 400 using the same transmission parameter. Therefore, there may be a terminal device 400 to which the data is not transmitted using an appropriate transmission parameter, and it is highly likely that communication may fail.

At this point, in the present embodiment, the determination unit 231 determines to perform first FEC when data is transmitted in broadcast or multicast. As a result, even in a terminal device 400 to which data is transmitted using a non-optimal transmission parameter, an error can be corrected by first FEC, thereby making it possible to perform communication more reliably.

Note that it has been described hereinabove, unless otherwise specified, that the determination unit 231 determines whether to perform first FEC for a case in which the base station device 200 transmits a data sequence (for the downlink), but the present invention is not limited thereto. Similarly to downlink communication, the determination unit 231 may determine whether to perform first FEC for the uplink or the sidelink communication.

### <<4. Change of Signal Processing>>

When the determination unit 231 determines to perform first FEC, the base station device 200 may partially change signal processing performed after the first FEC. Here, the description will be made for a case in which the base station device 200 performs transmission. However, in a case where the terminal device 400 performs transmission as well, the terminal device 400 can partially change signal processing in a similar manner.

### (Second FEC Processing)

When the determination unit 231 determines to perform first FEC, the base station device 200 may partially change second FEC processing.

When the first FEC is performed, the base station device 200 changes second FEC so that the processing amount becomes smaller. Alternatively, the base station device 200 changes a parameter for performing second FEC to another parameter requiring a smaller processing amount. For example, the base station device 300 switches a coding scheme table (e.g., an LDCP code matrix table) for second FEC.

By performing the first FEC, the base station device 200 can perform more highly reliable communication, but signal processing due to error correction increases. At this point, second FEC processing is changed to reduce a second FEC processing amount. As a result, it is possible to suppress an increase in signal processing amount in the base station device 200 (or the reception side) while securing a certain degree of reliability.

Note that it has been described hereinabove that the second FEC processing is changed, but the present invention is not limited thereto. When the first FEC is performed, the base station device 200 may omit the second FEC processing. By performing the first FEC even if the second FEC is omitted as described above, it is possible to suppress an increase in signal processing amount in the base station device 200 (or the reception side) while securing reliability.

### (Signal Processing in PHY Layer)

When the determination unit 231 determines to perform first FEC, the base station device 200 may partially change signal processing in the PHY layer. The signal processing in the PHY layer includes processing other than the second FEC processing.

For example, when the first FEC is performed, the base station device 200 switches a modulation scheme table (MCS). Alternatively, when the first FEC is performed, the base station device 200 may switch a channel quality information table.

By performing the first FEC, the base station device 200 can perform more highly reliable communication, but signal processing due to error correction increases. At this point, the signal processing in the PHY layer is changed to reduce the signal processing in the PHY layer. As a result, it is possible to suppress an increase in signal processing amount in the base station device 200 (or the reception side) while securing high reliability.

The signal processing in the PHY layer may include various types of signal processing as well as what has been described above, such as error correction other than the second FEC, scrambling, layer mapping, precoding, resource mapping, and OFDM processing.

### <<5. Communication Processing>>

Next, communication processing in the system according to an embodiment of the present disclosure will be described.

### <5.1. Downlink Communication Processing>

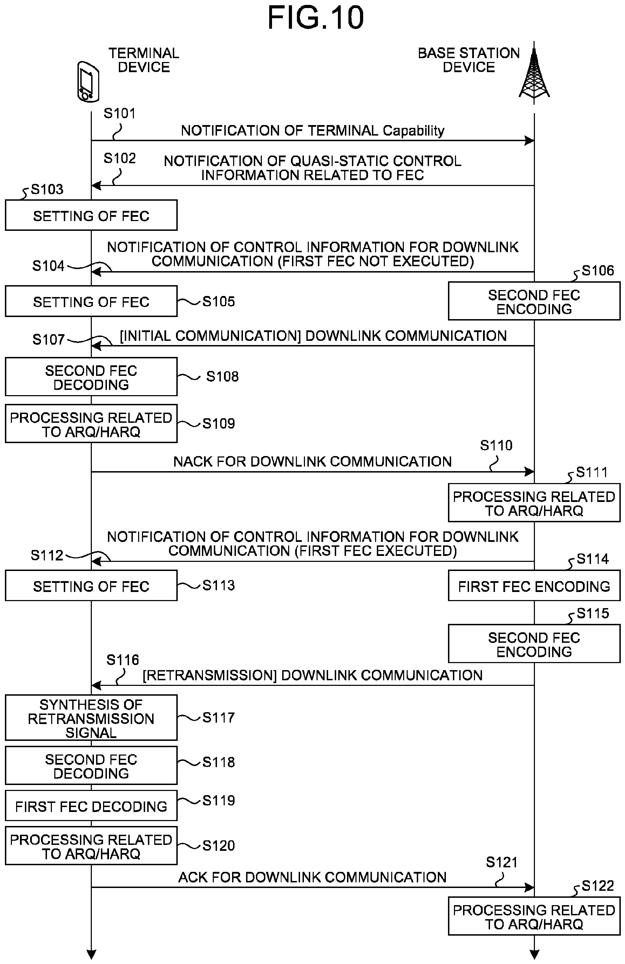

FIG. 10 is a sequence diagram illustrating an example of downlink communication processing according to an embodiment of the present disclosure. In the downlink communication, the base station device 200 serves as a transmission side (transmission device), and the terminal device 400 serves as a reception side (reception device). In this case, it is preferable that the transmission device (base station device 200) notify the reception device (terminal device 400) of whether to apply first FEC and a specific configuration parameter.

In FIG. 10, the description is made for a case in which the base station device 200 transmits a second transmission signal to which second FEC is applied as an initial transmission packet, and transmits a first transmission signal to which first FEC and second FEC are applied as a retransmission packet.

As illustrated in FIG. 10, the terminal device 400 notifies a base station device 200 of a cell 20 to which the terminal device 400 itself is connected of information regarding the terminal capability of the terminal device 400 (Step S101). The information also includes information regarding the capability of the first FEC. The information regarding the terminal capability is notified during the initial access or after the initial access.

As a physical channel for the notification, at least one of a physical random access channel (PRACH), a physical uplink control channel (PUCCH), and a physical uplink shared channel (PUSCH) is used.

The base station device 200 notifies a terminal device 400 connected to the cell 20 managed by the base station device 200 of quasi-static control information related to first FEC (Step S102).

The quasi-static control information may be cell-specific control information. The control information is notified during the initial access or after the initial access. Alternatively, the control information may be notified as a part of an RRC procedure, such as RRC signaling, RRC configuration, or RRC reconfiguration. Alternatively, the control information may be periodically notified from the base station device 200 to the terminal device 400.

As a physical channel for notifying the control information, at least one of a physical broadcast channel (PBCH), a physical downlink control channel or an enhanced physical downlink control channel (EPDCCH), and a physical downlink shared channel is used.

Receiving the quasi-static control information, the terminal device 400 sets the first FEC on the basis of the control information (Step S103).

Thereafter, it is assumed that downlink communication occurs from the base station device 200 to the terminal device 400. More specifically, it is assumed that downlink communication occurs, for example, because the terminal device 400 has requested data downloading (pulling) or push data is generated to the terminal device 400.

In addition, the base station device 200 notifies the terminal device 400 of control information (dynamic control information) such as radio resources used for downlink communication from the base station device 200 (Step S104).

The dynamic control information may be UE-specific control information for each terminal device 400 or UE-group-specific control information for each terminal group. Here, the terminal group is, for example, a group of one or more terminal devices 400 which are transmission destination targets in a case where the downlink communication is performed in multicast or broadcast.

Furthermore, the dynamic control information includes information regarding the following resources for allocating downlink communication to the target terminal device 400 (or terminal group).
- Frequency resource
- Time resource
- Spatial resource

Examples of the frequency resource include a resource block, a subcarrier, and a subcarrier group.

In addition, examples of the time resource include a subframe, a slot, a mini-slot, and a symbol.

In addition, examples of the spatial resource include an antenna, an antenna port, a spatial layer, and a spatial stream.

The dynamic control information includes the following information.
- Non-orthogonal resources (resources related to power and interleave pattern) for non-orthogonal multiple access (NOMA), multiuser superposition transmission (MUST), interleave division multiple access (IDMA), and codo division multiple access (CDMA).
- Information regarding a modulation level and an FEC coding rate of a lower layer (physical layer) (modulation and coding set (MCS))
- Information regarding a coding method and a coding rate of first FEC
- Information regarding a coding method and a coding rate of second FEC
- ARQ/HARQ settings (new data indicator (NDI), redundancy version (RV), and the like)

Note that, when first FEC is not performed, the base station device 200 may transmit the dynamic control information including information indicating that the first FEC is not performed as information regarding a coding method and a coding rate of first FEC.

Receiving the dynamic control information, the terminal device 400 performs settings for appropriately receiving downlink communication, including settings for second FEC, on the basis of the control information (Step S105) .

The base station device 200 performs encoding and modulation on downlink communication data to be transmitted to the terminal device 400 to match the control information notified to the terminal device 400. Here, the base station device 200 performs encoding and modulation including second FEC without performing first FEC (Step S106). The base station device 200 transmits the generated data to the terminal device 400 as a radio signal. This is initial downlink communication performed by the base station device 200 (Step S107) .

The terminal device 400 receives, demodulates, and decodes the radio signal from the base station device 200 in a lower layer and an upper layer according to the settings specified in the control information. At this time, the terminal device 400 performs second FEC decoding, without performing first FEC decoding (Step S108) .

The terminal device 400 performs ARQ/HARQ processing depending on whether the decoding of the data has succeeded or failed (Step S109). Specifically, the terminal device 400 sends ACK or NACK to the base station device 200 as a response depending on whether the decoding of the data has succeeded or failed. In addition, it is preferable that the terminal device 400 differently set ARQ/HARQ processing depending on whether the decoding of the data has succeeded or failed. For example, when the decoding has failed, it is preferable that the terminal device 400 stores a decoding result or data in the middle of decoding (a soft determination value, a log likelihood ratio (LLR), etc.) in a memory in order to perform retransmission and synthesis for a next HARQ.

Here, it is assumed that the terminal device 400 has failed to decode the data, and sends NACK as a response (Step S110).

According to ACK/NACK received from the terminal device 400, the base station device 200 performs ARQ/HARQ processing (Step 5111). The base station device 200 executes subsequent processing that needs to be performed according to ACK/NACK received from the terminal device 400. Here, since NACK is notified, the base station device 200 performs preparation for retransmission according to ARQ/HARQ. The preparation for retransmission may include selecting an RV, selecting an MCS, selecting a radio resource, setting first FEC, setting second FEC, and the like. Note that, in a case where ACK is received from the terminal device 400, this means that the target data can be transmitted and received without any problem, and thus, the base station device 200 shifts to next communication of new data.

According to the ARQ/HARQ processing corresponding to ACK/NACK, the base station device 200 proceeds to perform retransmission of data or downlink communication of new data. To this end, the base station device 200 notifies the target terminal device 400 of dynamic control information again, and executes downlink communication according to settings specified in the dynamic control information.

Here, for example, when NACK is received, the base station device 200 notifies of control information for downlink communication, assuming that first FEC will be performed (Step S112). The control information is dynamic control information.

Receiving the dynamic control information, the terminal device 400 performs settings for appropriately receiving downlink communication, including settings for first FEC and second FEC, on the basis of the control information (Step S113).

The base station device 200 performs encoding and modulation on downlink communication data to be transmitted to the terminal device 400 in each of an upper layer and a lower layer to match the control information notified to the terminal device 400. Here, the base station device 200 performs first FEC encoding (Step S114), and performs second FEC encoding (Step S115). The base station device 200 retransmits downlink communication by transmitting the encoded and modulated data as a radio signal to the terminal device 400 (Step S116).

The terminal device 400 synthesizes the retransmission signal from the base station device 200 with the radio signal for the initial communication received in Step S107 (Step S117). The terminal device 400 receives, demodulates, and decodes the synthesized signal in a lower layer and an upper layer according to the settings specified in the control information. At this time, the terminal device 400 performs second FEC decoding (Step S118), and performs first FEC decoding (Step S119).

The terminal device 400 performs ARQ/HARQ processing depending on whether the decoding of the data has succeeded or failed (Step S120). Here, it is assumed that the terminal device 400 has succeeded in decoding the data and sends ACK as a response (Step S121).

According to ACK/NACK received from the terminal device 400, the base station device 200 performs ARQ/HARQ processing (Step S122). Here, since ACK is notified, the base station device 200 shifts to next communication of new data.

### <5.2. Uplink Communication Processing>

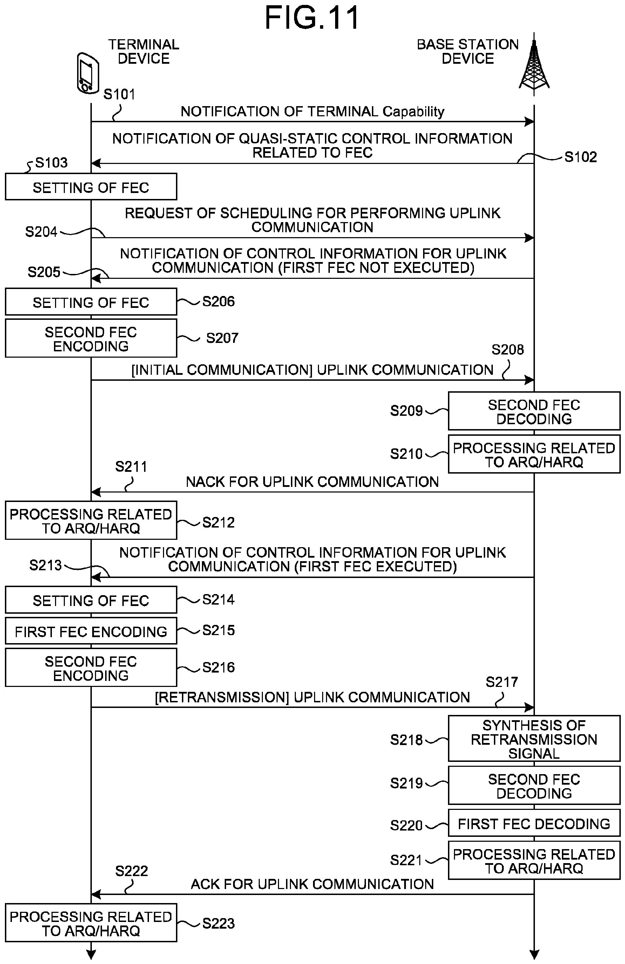

FIG. 11 is a sequence diagram illustrating an example of uplink communication processing according to an embodiment of the present disclosure. In the uplink communication, the base station device 200 serves as a reception side (reception device), and the terminal device 400 serves as a transmission side (transmission device).

In this case, it is preferable that the reception device (base station device 200) notify the transmission device (terminal device 400) of whether to apply first FEC and a specific configuration parameter.

In FIG. 11, the description is made for a case in which the terminal device 400 transmits a second transmission signal to which second FEC is applied as an initial transmission packet, and transmits a first transmission signal to which first FEC and second FEC are applied as a retransmission packet. Note that Steps S101 to S103 are the same as those in FIG. 10, and thus, the description thereof will be omitted.

As illustrated in FIG. 11, when uplink communication occurs from the terminal device 400 to the base station device 200, the terminal device 400 requests scheduling for performing the uplink communication (Step S204) .

Next, the base station device 200 notifies the terminal device 400 of control information (dynamic control information) such as radio resources used for uplink communication (Step S205). Note that the dynamic control information is the same as the dynamic control information for the downlink communication described with reference to FIG. 10, except that the dynamic control information is control information for the uplink communication. Thus, the description thereof will be omitted.

Receiving the dynamic control information, the terminal device 400 performs settings for appropriately receiving uplink communication, including settings for second FEC, on the basis of the control information (Step S206) .

The terminal device 400 performs encoding and modulation on uplink communication data to be transmitted to the base station device 200 to match the control information specified by the control information. Here, the terminal device 400 performs encoding and modulation including second FEC without performing first FEC (Step S207). The terminal device 400 transmits the generated data to the base station device 200 as a radio signal. This is initial uplink communication performed by the terminal device 400 (Step S208) .

The base station device 200 receives, demodulates, and decodes the radio signal from the terminal device 400 in a lower layer and an upper layer according to the settings notified to the terminal device 400. At this time, the base station device 200 performs second FEC decoding, without performing first FEC decoding (Step S209).

The base station device 200 performs ARQ/HARQ processing depending on whether the decoding of the data has succeeded or failed (Step S210). Specifically, the base station device 200 sends ACK or NACK to the terminal device 400 as a response depending on whether the decoding of the data has succeeded or failed. In addition, it is preferable that the base station device 200 differently set ARQ/HARQ processing depending on whether the decoding of the data has succeeded or failed. For example, when the decoding has failed, it is preferable that the base station device 200 stores a decoding result or data in the middle of decoding (a soft determination value, a log likelihood ratio (LLR), etc.) in a memory in order to perform retransmission and synthesis for a next HARQ.

Here, it is assumed that the base station device 200 has failed to decode the data, and sends NACK as a response (Step S211).

According to ACK/NACK received from the base station device 200, the terminal device 400 performs ARQ/HARQ processing (Step S212). The terminal device 400 executes subsequent processing that needs to be performed according to ACK/NACK received from the base station device 200. Here, since NACK is notified, the terminal device 400 performs preparation for retransmission according to ARQ/HARQ. The preparation for retransmission may include selecting an RV, selecting an MCS, selecting a radio resource, setting first FEC, setting second FEC, and the like. Note that, in a case where ACK is received from the base station device 200, this means that the target data can be transmitted and received without any problem, and thus, the terminal device 400 shifts to next communication of new data.

According to the ARQ/HARQ processing corresponding to ACK/NACK, the terminal device 400 proceeds to perform retransmission of data or uplink communication of new data. To this end, the base station device 200 notifies the target terminal device 400 of dynamic control information again (Step S213), and executes uplink communication according to settings specified in the dynamic control information. Here, since the base station device 200 has transmitted NACK, the base station device 200 notifies of dynamic control information for retransmission. The dynamic control information for retransmission includes information for performing first FEC.

Receiving the dynamic control information, the terminal device 400 performs settings for appropriately receiving the uplink communication, including settings for first FEC and second FEC, on the basis of the control information (Step S214).

The terminal device 400 performs encoding and modulation on uplink communication data to be transmitted to the base station device 200 in each of an upper layer and a lower layer to match the control information notified from the base station device 200. Here, the terminal device 400 performs first FEC encoding (Step S215), and performs second FEC encoding (Step S216). The terminal device 400 retransmits uplink communication by transmitting the encoded and modulated data as a radio signal to the base station device 200 (Step S217).

The base station device 200 synthesizes the retransmission signal from the terminal device 400 with the radio signal for the initial communication received in Step S208 (Step S218). The base station device 200 receives, demodulates, and decodes the synthesized signal in a lower layer and an upper layer according to the settings specified in the control information. At this time, the base station device 200 performs second FEC decoding (Step S219), and performs first FEC decoding (Step S220).

The base station device 200 performs ARQ/HARQ processing depending on whether the decoding of the data has succeeded or failed (Step S221). Here, it is assumed that the base station device 200 has succeeded in decoding the data and sends ACK as a response (Step S222).

According to ACK/NACK received from the base station device 200, the terminal device 400 performs ARQ/HARQ processing (Step S223). Here, since ACK is notified, the terminal device 400 shifts to next communication of new data.

### <5.3. Sidelink Communication Processing>

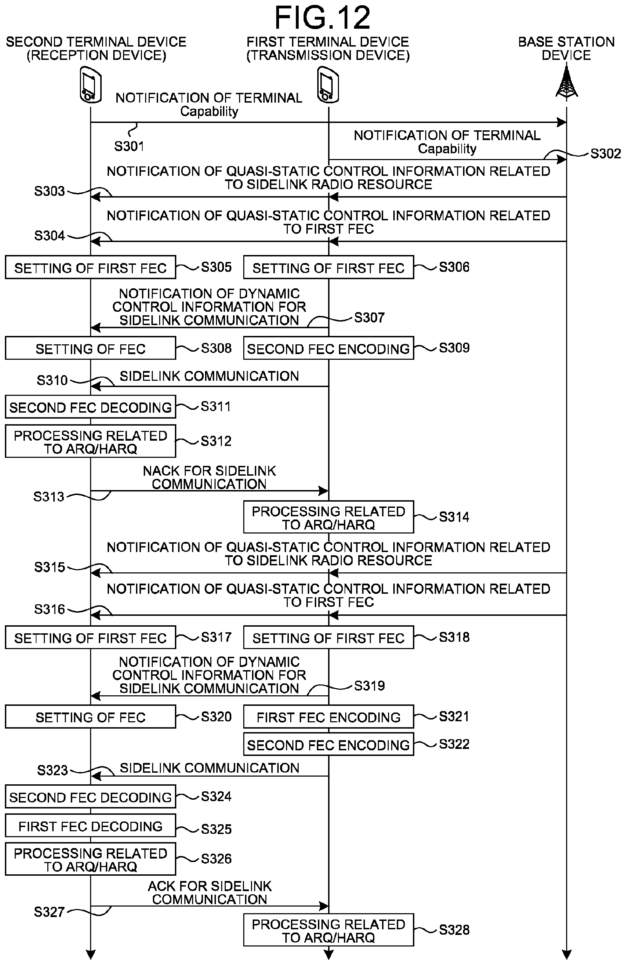

FIG. 12 is a sequence diagram illustrating an example of sidelink communication processing according to an embodiment of the present disclosure. In the sidelink communication, a first terminal device 400A serves as a transmission side (transmission device), and a second terminal device 400B serves as a reception side (reception device). In the sidelink communication, it is preferable that the base station device 200 notifies the transmission device (first terminal device 400A) and the reception device (second terminal device 400B) of whether to apply first FEC and a specific configuration parameter. In a case where there is no base station device 200, a terminal device serving as a transmission device (the first terminal device 400A in the following example) may have functions equivalent to those of the base station device 200. That is, the first terminal device 400A may notify the second terminal device 400B of whether to apply first FEC and a specific configuration parameter.

In FIG. 12, the description is made for a case in which the first terminal device 400A transmits a second transmission signal to which second FEC is applied as an initial transmission packet, and transmits a first transmission signal to which first FEC and second FEC are applied as a retransmission packet.

As illustrated in FIG. 12, the first terminal device 400A notifies a base station device 200 of a cell 20 to which the first terminal device 400A itself is connected of information regarding the terminal capability of the first terminal device 400A (Step S301). Similarly, the second terminal device 400B also notifies the base station device 200 of information regarding the terminal capability of the second terminal device 400B (Step S302). The information regarding the terminal capability is the same as that described with reference to FIG. 10.

The base station device 200 notifies the first and second terminal devices 400A and 400B connected to the cell 20 managed by the base station device 200 of quasi-static control information related to sidelink radio resources (Step S303). In addition, the base station device 200 notifies the first and second terminal devices 400A and 400B of quasi-static control information related to first FEC (Step S304).

For the quasi-static control information related to sidelink radio resources, a frequency resource (e.g., a resource block, a subcarrier group, or a subcarrier) and a time resource (a radio frame, a subframe, a slot, a mini-slot, or a symbol) of a sidelink radio resource pool may be designated. The first and second terminal devices 400A and 400B may perform sidelink communication using radio resources within the range of the radio resource pool.

Concerning the radio resource pool, it is preferable to apply some of the uplink resources of the target cell 20 to the sidelink radio resource pool. Alternatively, some of the downlink resources of the target cell 20 may be applied to the sidelink radio resource pool.

The quasi-static control information related to first FEC and the quasi-static control information related to sidelink radio resources may be separately notified to the first and second terminal devices 400A and 400B, or may be simultaneously notified to the first and second terminal devices 400A and 400B.

The quasi-static control information may be cell-specific control information. The control information is notified during the initial access or after the initial access. In addition, the control information may be notified as a part of an RRC procedure, such as RRC signaling, RRC configuration, or RRC reconfiguration. In addition, the control information may be periodically notified from the base station device 200 to the first and second terminal devices 400A and 400B.

As a physical channel for notifying the control information, at least one of a physical broadcast channel (PBCH), a physical downlink control channel or an enhanced physical downlink control channel (EPDCCH), and a physical downlink shared channel is used.

Receiving the quasi-static control information, the first and second terminal devices 400A and 400B set the first FEC on the basis of the control information (Steps S305 and S306).

Thereafter, specifically, it is assumed that sidelink communication has occurred from the first terminal device 400A to the second terminal device 400B. For example, when direct communication between the first and second terminal devices 400A and 400B occurs or when a request for direct communication is received from the second terminal device 400B, sidelink communication occurs from the first terminal device 400A to the second terminal device 400B. In this case, the first terminal device 400A notifies the second terminal device 400B of control information (dynamic control information) such as radio resources used for sidelink communication (Step S307). Note that the dynamic control information is the same as the control information described with reference to FIGS. 10 and 11, except that the dynamic control information is transmitted by the first terminal device 400A.

Receiving the dynamic control information, the second terminal device 400B performs settings for appropriately receiving sidelink communication, including settings for second FEC, on the basis of the control information (Step S308).

The first terminal device 400A performs encoding and modulation on sidelink communication data to be transmitted to the second terminal device 400B to match the control information notified to the second terminal device 400B. Here, the first terminal device 400A performs encoding and modulation including second FEC without performing first FEC (Step S309). The first terminal device 400A transmits the generated data to the second terminal device 400B as a radio signal. This is initial sidelink communication performed by the first terminal device 400A (Step S310).

The second terminal device 400B receives, demodulates, and decodes the radio signal from the first terminal device 400A in a lower layer and an upper layer according to the settings specified in the control information. At this time, the second terminal device 400B performs second FEC decoding, without performing first FEC decoding (Step S311).

The second terminal device 400B performs ARQ/HARQ processing depending on whether the decoding of the data has succeeded or failed (Step S312). Specifically, the second terminal device 400B sends ACK or NACK to the first terminal device 400A as a response depending on whether the decoding of the data has succeeded or failed. In addition, it is preferable that the second terminal device 400B differently set ARQ/HARQ processing depending on whether the decoding of the data has succeeded or failed. For example, when the decoding has failed, it is preferable that the second terminal device 400B stores a decoding result or data in the middle of decoding (a soft determination value, a log likelihood ratio (LLR), etc.) in a memory in order to perform retransmission and synthesis for a next HARQ.

Here, it is assumed that the second terminal device 400B has failed to decode the data, and sends NACK as a response (Step S313) .

According to ACK/NACK received from the second terminal device 400B, the first terminal device 400A performs ARQ/HARQ processing (Step SS314). The first terminal device 400A executes subsequent processing that needs to be performed according to ACK/NACK received from the second terminal device 400B. Here, since NACK is notified, the first terminal device 400A performs preparation for retransmission according to ARQ/HARQ. The preparation for retransmission may include selecting an RV, selecting an MCS, selecting a radio resource, setting first FEC, setting second FEC, and the like. Note that, in a case where ACK is received from the second terminal device 400B, this means that the target data can be transmitted and received without any problem, and thus, the first terminal device 400A shifts to next communication of new data.

Here, the base station device 200 notifies the first and second terminal devices 400A and 400B of the quasi-static control information related to sidelink radio resources and the quasi-static control information related to first FEC described above, for example, at regular intervals (Steps S315 and S316) .

Receiving the quasi-static control information, the first and second terminal devices 400A and 400B set the first FEC on the basis of the control information (Steps S317 and S318) .

Next, according to the ARQ/HARQ processing corresponding to ACK/NACK, the first terminal device 400A proceeds to perform retransmission of data or sidelink communication of new data. To this end, the first terminal device 400A notifies the target second terminal device 400B of dynamic control information again, and executes sidelink communication according to settings specified in the

### dynamic control information.

Here, for example, when NACK is received, the first terminal device 400A notifies of control information for sidelink communication, assuming that first FEC will be performed (Step S319). The control information is dynamic control information.

Receiving the dynamic control information, the second terminal device 400B performs settings for appropriately receiving sidelink communication, including settings for first FEC and second FEC, on the basis of the control information (Step S320).

The first terminal device 400A performs encoding and modulation on sidelink communication data to be transmitted to the second terminal device 400B in each of an upper layer and a lower layer to match the control information notified to the second terminal device 400B. Here, the first terminal device 400A performs first FEC encoding (Step S321), and performs second FEC encoding (Step S322). The first terminal device 400A retransmits sidelink communication by transmitting the encoded and modulated data as a radio signal to the second terminal device 400B (Step S323).

The second terminal device 400B synthesizes the retransmission signal from the first terminal device 400A with the radio signal for the initial communication received in Step S107, and receives, demodulates, and decodes the synthesized signal in a lower layer and an upper layer according to the settings specified in the control information. At this time, the second terminal device 400B performs second FEC decoding (Step S324), and performs first FEC decoding (Step S325).

The second terminal device 400B performs ARQ/HARQ processing depending on whether the decoding of the data has succeeded or failed (Step S326). Here, it is assumed that the second terminal device 400B has succeeded in decoding the data and sends ACK as a response (Step S327).

According to ACK/NACK received from the second terminal device 400B, the first terminal device 400A performs ARQ/HARQ processing (Step S328). Here, since ACK is notified, the first terminal device 400 shifts to next communication of new data.

### <5.4. Other Communication Processing>

As a communication system, there may be a system including a transmission device and a reception device whose roles are almost equal (e.g., wireless LAN or Wi-Fi) and a system including a transmission device and a reception device whose roles are different (e.g., a cellular system, 4G LTE, 5G NR, wireless LAN according to IEEE802.11ac or a standard thereafter, or Wi-Fi). In a case where the roles of the transmission device and the reception device are different, a relationship between a base station device (base station (BS), eNB, gNB, or the like) and a terminal device (user equipment (UE), mobile terminal (MT), or the like), a relationship between an access point (AP) device and a station (STA) device, and the like are considered.

It has been described above that the system includes a transmission device and a reception device whose roles are different. However, the technology of the present disclosure can also be applied to a system including a transmission device and a reception device whose roles are almost equal, such as wireless LAN or Wi-Fi.

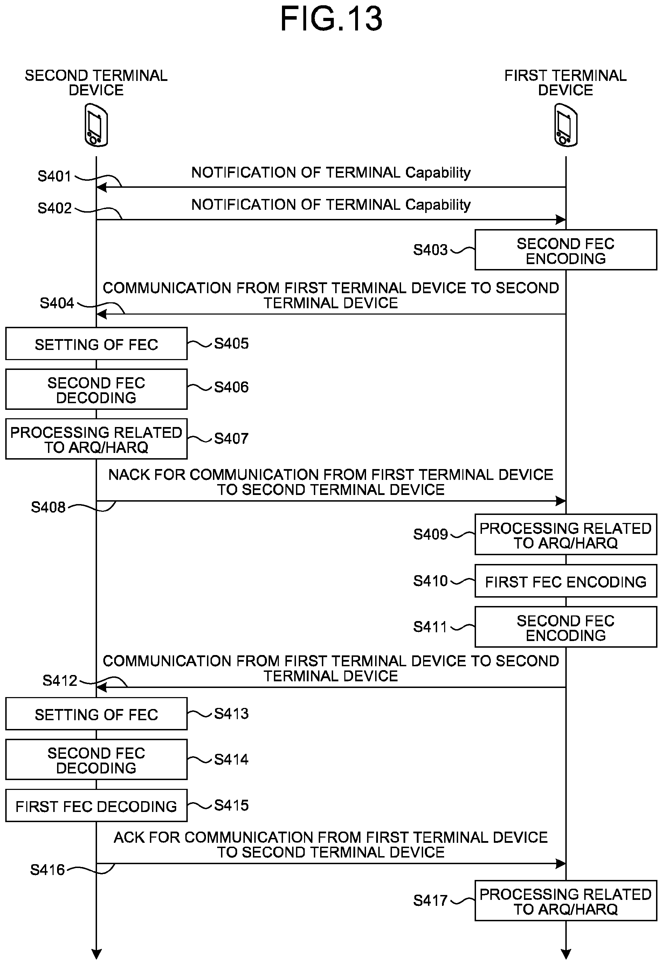

At this point, communication processing in a system including a transmission device and a reception device whose roles are almost equal will be described with reference to FIG. 13. Note that, in the following description, a first terminal device 400A serves as a transmission device, and a second terminal device 400B serves as a reception device. Furthermore, in the technology of the present disclosure, it is preferable that the first terminal device 400A serving as a transmission device sets first FEC.

FIG. 13 is a sequence diagram illustrating an example of communication processing according to an embodiment of the present disclosure. In FIG. 13, the description is made for a case in which the first terminal device 400A transmits a second transmission signal to which second FEC is applied as an initial transmission packet, and transmits a first transmission signal to which first FEC and second FEC are applied as a retransmission packet.

As illustrated in FIG. 13, the first terminal device 400A notifies the second terminal device 400B of information regarding the terminal capability of the first terminal device 400A (Step S401). Similarly, the second terminal device 400B also notifies the first terminal device 400A of information regarding the terminal capability of the second terminal device 400B (Step S402). For example, the capability information is included in a beacon when notified.

When data is transmitted from the first terminal device 400A to the second terminal device 400B, the first terminal device 400A performs encoding and modulation processing on the data to be transmitted according to the capabilities of the first and second terminal devices 400A and 400B. Here, since first FEC encoding is not performed, the first terminal device 400A performs second FEC encoding on the data to be transmitted (Step S403).

The first terminal device 400A transmits the encoded and modulated data as a radio signal to the second terminal device 400B (Step S404).

For example, the radio signal includes a lower layer preamble, a lower layer header, a lower layer payload, and a part of a lower layer cyclic redundancy check (CRC) as a lower layer packet (lower layer frame). The lower layer preamble includes dynamic control information for a lower layer, such as an MCS, an FEC code, a frequency resource (a resource block, a subcarrier group, a subcarrier, or the like), a time resource (a lower layer frame length (the number of symbols), or the like), and a spatial resource (an antenna, an antenna port, a spatial layer, a spatial stream, or the like) for the layer. It is preferable that the dynamic control information for the lower layer is valid only for the lower layer packet.

Receiving the radio signal (lower layer packet) from the first terminal device 400A, the second terminal device 400B decodes the lower layer header to acquire dynamic control information necessary for demodulating and decoding the lower layer payload. The second terminal device 400B performs setting for appropriately decoding the radio signal, including setting for second FEC, on the basis of the acquired dynamic control information (Step S405).

The second terminal device 400B performs demodulation and decoding processing on the lower layer payload on the basis of the dynamic control information for the lower layer. After demodulating and decoding the lower layer payload, the second terminal device 400B decodes (including interleaving and deinterleaving) a divided block of an upper layer. At this time, the terminal device 400 performs second FEC decoding, without performing first FEC decoding (Step S406).

The second terminal device 400B performs ARQ/HARQ processing depending on whether the decoding of the data has succeeded or failed (Step S407). Specifically, the second terminal device 400B sends ACK or NACK to the first terminal device 400A as a response depending on whether the decoding of the data has succeeded or failed. In addition, it is preferable that the second terminal device 400B differently set ARQ/HARQ processing depending on whether the decoding of the data has succeeded or failed. For example, when the decoding has failed, it is preferable that the second terminal device 400B stores a decoding result or data in the middle of decoding (a soft determination value, a log likelihood ratio (LLR), etc.) in a memory in order to perform retransmission and synthesis for a next HARQ.

Here, it is assumed that the second terminal device 400B has failed to decode the data, and sends NACK as a response (Step S408).

According to ACK/NACK received from the second terminal device 400B, the first terminal device 400A performs ARQ/HARQ processing (Step S409). The first terminal device 400A executes subsequent processing that needs to be performed according to ACK/NACK received from the second terminal device 400B. Here, since NACK is notified, the first terminal device 400A performs preparation for retransmission according to ARQ/HARQ. The preparation for retransmission may include selecting an RV, selecting an MCS, selecting a radio resource, setting first FEC, setting second FEC, and the like. Note that, in a case where ACK is received from the second terminal device 400B, this means that the target data can be transmitted and received without any problem, and thus, the first terminal device 400A shifts to next communication of new data.

According to the ARQ/HARQ processing corresponding to ACK/NACK, the first terminal device 400A proceeds to perform retransmission of data or communication of new data.

Here, the first terminal device 400A performs retransmission of data in order to receive ACK. In this case, the first terminal device 400A performs encoding and modulation processing on the data to be transmitted according to the capabilities of the first and second terminal devices 400A and 400B. Here, in order to perform first FEC encoding, the first terminal device 400A performs second FEC encoding on the data to be transmitted (Step S410), and performs second FEC encoding (Step S411).

The first terminal device 400A transmits the encoded and modulated data as a radio signal to the second terminal device 400B (Step S412).

Receiving the radio signal (lower layer packet) from the first terminal device 400A, the second terminal device 400B decodes the lower layer header to acquire dynamic control information necessary for demodulating and decoding the lower layer payload. The second terminal device 400B performs setting for appropriately decoding the radio signal, including setting for second FEC, on the basis of the acquired dynamic control information (Step S413).

The second terminal device 400B performs demodulation and decoding processing on the lower layer payload on the basis of the dynamic control information for the lower layer. After demodulating and decoding the lower layer payload, the second terminal device 400B decodes (including first FEC decoding, interleaving, and deinterleaving) a divided block of an upper layer. At this time, the terminal device 400 performs first FEC decoding (Step S414), and performs second FEC decoding (Step S415).

The second terminal device 400B performs ARQ/HARQ processing depending on whether the decoding of the data has succeeded or failed (Step S416). Here, it is assumed that the second terminal device 400B has succeeded in decoding the data and sends ACK as a response (Step S416).

According to ACK/NACK received from the second terminal device 400B, the first terminal device 400A performs ARQ/HARQ processing (Step S417). Here, since ACK is received from the second terminal device 400B, the first terminal device 400A determines that there is no problem with the target data, and shifts to next communication of new data.

### <<6. Supplement>>

Although the preferred embodiments of the present disclosure have been described in detail above with reference to the accompanying drawings, the technical scope of the present disclosure is not limited to such embodiments. It is obvious for a person having ordinary knowledge in the technical field of the present disclosure to conceive various changes or modifications within the scope of the technical idea set forth in the claims, and it should be understood that these changes or modifications also fall within the technical scope of the present disclosure.

Among the processes described in the above-described embodiments, all or some of the processes described as being automatically performed can be manually performed, or all or some of the processes described as being manually performed can be automatically performed by known methods. In addition, the processing procedures, the specific terms, and the information including various kinds of data and parameters described in the above documents and drawings can be arbitrarily changed unless otherwise specified. For example, the various kinds of information illustrated in each of the drawings are not limited to the illustrated information.

In addition, each component of each device illustrated in the drawings is functionally conceptual, and is not necessarily configured as illustrated in the drawings in physical term. That is, a specific form in which the devices are distributed or integrated is not limited to what is illustrated, and all or some of the devices can be configured in a form functionally or physically distributed or integrated in an arbitrary unit according to various loads, usage conditions, and the like.

In addition, the above-described embodiments can be appropriately combined unless any processing contradiction is caused.

Furthermore, the effects described in the present specification are merely illustrative or exemplary, and are not restrictive. That is, the technology according to the present disclosure can exhibit other effects obvious to those skilled in the art from the description of the present specification together with or instead of the above-described effects.

Note that the following configurations also fall within the technical scope of the present disclosure.
(1) An information processing device comprising:
   a first encoding processing unit that performs first error correction encoding processing in which a plurality of bit sequences are output from one or more bit sequences;
   a second encoding processing unit that performs second error correction encoding processing in which one bit sequence is output from one bit sequence; and
   a communication unit that transmits at least one of a first transmission signal or a second transmission signal depending on a predetermined condition, the first transmission signal being obtained by performing the first error correction encoding processing and the second error correction encoding processing on transmission data sequences, and the second transmission signal being obtained by performing the second error correction encoding processing on the transmission data sequences.
(2) The information processing device according to (1), wherein the communication unit transmits either the first transmission signal or the second transmission signal depending on communication quality required for transmitting the transmission data sequences.
(3) The information processing device according to (1) or (2), wherein the communication unit transmits either the first transmission signal or the second transmission signal depending on whether to replicate the transmission data sequences.
(4) The information processing device according to any one of (1) to (3), wherein the communication unit transmits either the first transmission signal or the second transmission signal depending on whether or not the first transmission signal is decodable by a communication counterpart.
(5) The information processing device according to any one of (1) to (4), wherein the communication unit transmits either the first transmission signal or the second transmission signal depending on a channel through which the transmission data sequences are transmitted.
(6) The information processing device according to any one of (1) to (5), wherein the communication unit transmits the first transmission signal when a radio resource control (RRC) state transitions to RRC-Connected.
(7) The information processing device according to any one of (1) to (6), wherein the communication unit transmits the first transmission signal when the transmission data sequences are transmitted to a plurality of destinations.
(8) The information processing device according to (1), wherein the communication unit:
   divides transmission data sequence groups obtained by performing the first error correction encoding processing and the second error correction encoding processing on the transmission data sequences into a first transmission data sequence group to be used for first error correction decoding processing corresponding to the first error correction encoding processing and a second transmission data sequence group that is decodable without performing the first error correction decoding processing; and
   transmits either the first transmission signal generated from the first transmission data sequence group or the second transmission signal generated from the second transmission data sequence group.
(9) The information processing device according to (8), wherein the communication unit transmits the first transmission signal and the second transmission signal through different propagation paths, respectively.
(10) An information processing device comprising:
   a communication unit that receives a reception signal;
   a first decoding processing unit that performs first error correction decoding processing in which one bit sequence is output from a plurality of bit sequences; and
   a second decoding processing unit that performs second error correction decoding processing in which one bit sequence is output from one bit sequence,
   wherein either the second error correction decoding processing and the first error correction decoding processing or the second error correction decoding processing is performed on the reception signal depending on a predetermined condition.
(11) An information processing system comprising:
   a first information processing device; and
   a second information processing device,
   wherein the first information processing device includes:
      a first encoding processing unit that performs first error correction encoding processing in which a plurality of bit sequences are output from one or more bit sequences; a second encoding processing unit that performs second error correction encoding processing in which one bit sequence is output from one bit sequence; and
      a communication unit that transmits at least one of a first transmission signal or a second transmission signal depending on a predetermined condition, the first transmission signal being obtained by performing the first error correction encoding processing and the second error correction encoding processing on transmission data sequences, and the second transmission signal being obtained by performing the second error correction encoding processing on the transmission data sequences, and
      wherein the second information processing device includes:
         a communication unit that receives the first transmission signal or the second transmission signal;
         a first decoding processing unit that performs first error correction decoding processing corresponding to the first error correction encoding processing on the first transmission signal; and
         a second decoding processing unit that performs second error correction decoding processing corresponding to the second error correction encoding processing on the first transmission signal and the second transmission signal.
(12) A communication method, comprising:
   performing first error correction encoding processing in which a plurality of bit sequences are output from one or more bit sequences;
   performing second error correction encoding processing in which one bit sequence is output from one bit sequence; and
   transmitting at least one of a first transmission signal or a second transmission signal depending on a predetermined condition, the first transmission signal being obtained by performing the first error correction encoding processing and the second error correction encoding processing on transmission data sequences, and the second transmission signal being obtained by performing the second error correction encoding processing on the transmission data sequences.
(13) A communication method, comprising:
   receiving a reception signal;
   performing first error correction decoding processing in which one bit sequence is output from a plurality of bit sequences;
   performing second error correction decoding processing in which one bit sequence is output from one bit sequence; and
   performing either the second error correction decoding processing and the first error correction decoding processing or the second error correction decoding processing on the reception signal depending on a predetermined condition.

### Reference Signs List

21, 41 SIGNAL PROCESSING UNIT
23, 45 CONTROL UNIT
200 BASE STATION DEVICE
211, 411 RECEPTION PROCESSING UNIT
212, 412 TRANSMISSION PROCESSING UNIT
211b, 211d DECODING UNIT
212b, 212d ENCODING UNIT
400 TERMINAL DEVICE

## Claims

1. An information processing device comprising:
a first encoding processing unit that performs first error correction encoding processing in which a plurality of bit sequences are output from one or more bit sequences;
a second encoding processing unit that performs second error correction encoding processing in which one bit sequence is output from one bit sequence; and
a communication unit that transmits at least one of a first transmission signal or a second transmission signal depending on a predetermined condition, the first transmission signal being obtained by performing the first error correction encoding processing and the second error correction encoding processing on transmission data sequences, and the second transmission signal being obtained by performing the second error correction encoding processing on the transmission data sequences.

2. The information processing device according to claim 1, wherein the communication unit transmits either the first transmission signal or the second transmission signal depending on communication quality required for transmitting the transmission data sequences.

3. The information processing device according to claim 1, wherein the communication unit transmits either the first transmission signal or the second transmission signal depending on whether to replicate the transmission data sequences.

4. The information processing device according to claim 1, wherein the communication unit transmits either the first transmission signal or the second transmission signal depending on whether or not the first transmission signal is decodable by a communication counterpart.

5. The information processing device according to claim 1, wherein the communication unit transmits either the first transmission signal or the second transmission signal depending on a channel through which the transmission data sequences are transmitted.

6. The information processing device according to claim 1, wherein the communication unit transmits the first transmission signal when a radio resource control (RRC) state transitions to RRC-Connected.

7. The information processing device according to claim 1, wherein the communication unit transmits the first transmission signal when the transmission data sequences are transmitted to a plurality of destinations.

8. The information processing device according to claim 1, wherein the communication unit:
divides transmission data sequence groups obtained by performing the first error correction encoding processing and the second error correction encoding processing on the transmission data sequences into a first transmission data sequence group to be used for first error correction decoding processing corresponding to the first error correction encoding processing and a second transmission data sequence group that is decodable without performing the first error correction decoding processing; and
transmits either the first transmission signal generated from the first transmission data sequence group or the second transmission signal generated from the second transmission data sequence group.

9. The information processing device according to claim 8, wherein the communication unit transmits the first transmission signal and the second transmission signal through different propagation paths, respectively.

10. An information processing device comprising:
a communication unit that receives a reception signal;
a first decoding processing unit that performs first error correction decoding processing in which one bit sequence is output from a plurality of bit sequences; and
a second decoding processing unit that performs second error correction decoding processing in which one bit sequence is output from one bit sequence,
wherein either the second error correction decoding processing and the first error correction decoding processing or the second error correction decoding processing is performed on the reception signal depending on a predetermined condition.

11. An information processing system comprising:
a first information processing device; and
a second information processing device,
wherein the first information processing device includes:
a first encoding processing unit that performs first error correction encoding processing in which a plurality of bit sequences are output from one or more bit sequences;
a second encoding processing unit that performs second error correction encoding processing in which one bit sequence is output from one bit sequence; and
a communication unit that transmits at least one of a first transmission signal or a second transmission signal depending on a predetermined condition, the first transmission signal being obtained by performing the first error correction encoding processing and the second error correction encoding processing on transmission data sequences, and the second transmission signal being obtained by performing the second error correction encoding processing on the transmission data sequences, and
wherein the second information processing device includes:
a communication unit that receives the first transmission signal or the second transmission signal;
a first decoding processing unit that performs first error correction decoding processing corresponding to the first error correction encoding processing on the first transmission signal; and
a second decoding processing unit that performs second error correction decoding processing corresponding to the second error correction encoding processing on the first transmission signal and the second transmission signal.

12. A communication method, comprising:
performing first error correction encoding processing in which a plurality of bit sequences are output from one or more bit sequences;
performing second error correction encoding processing in which one bit sequence is output from one bit sequence; and
transmitting at least one of a first transmission signal or a second transmission signal depending on a predetermined condition, the first transmission signal being obtained by performing the first error correction encoding processing and the second error correction encoding processing on transmission data sequences, and the second transmission signal being obtained by performing the second error correction encoding processing on the transmission data sequences.

13. A communication method, comprising:
receiving a reception signal;
performing first error correction decoding processing in which one bit sequence is output from a plurality of bit sequences;
performing second error correction decoding processing in which one bit sequence is output from one bit sequence; and
performing either the second error correction decoding processing and the first error correction decoding processing or the second error correction decoding processing on the reception signal depending on a predetermined condition.
